# EUROPÄISCHE PATENTSCHRIFT

(11) **EP 3 940 356 B1**
(45) Veröffentlichungstag und Bekanntmachung des Hinweises auf die Patenterteilung: **08.01.2025**
(21) Anmeldenummer: 21185743.8
(22) Anmeldetag: 15.07.2021
(51) Int. Cl.: G01J 1/02, G01J 1/42, G01M 11/02

(54) **VERFAHREN ZUR RÄUMLICHEN CHARAKTERISIERUNG DES OPTISCHEN ABSTRAHLVERHALTENS VON LICHT- UND STRAHLUNGSQUELLEN**
METHOD FOR THE SPATIAL CHARACTERISATION OF THE OPTICAL EMISSION BEHAVIOUR OF LIGHT AND RADIATION SOURCES
PROCÉDÉ DE CARACTÉRISATION SPATIALE DU COMPORTEMENT OPTIQUE DE RAYONNEMENT DE LA LUMIÈRE ET DES SOURCES DE RAYONNEMENT

(30) Priorität: 17.07.2020 DE 102020208992
(43) Veröffentlichungstag der Anmeldung: 19.01.2022
(73) Patentinhaber: TechnoTeam Holding GmbH, 98693 Ilmenau (DE)
(72) Erfinder: KRÜGER, Udo, 99837 Werra-Suhl-Tal OT Wünschensuhl (DE); SCHWANENGEL, Christian, 98693 Ilmenau (DE); TRAMPERT, Klaus, 76137 Karlsruhe (DE)
(74) Vertreter: Liedtke & Partner Patentanwälte

(56) Entgegenhaltungen:
- DE-A1- 102014 205 430
- DE-A1- 102015 201 093
- US-A1- 2019 362 519
- CHR. SCHWANENGEL: "Gegenüberstellung von Messtechniken zur Messung von Lichtstärkeverteilungen und Lichstärkeverteilungsausschnitten", 1 August 2010 (2010-08-01), New York, XP055542913, Retrieved from the Internet <URL:https://www.technoteam.de/e6009/e6311/e5983/pb_download5985/LVK_Messtechniken_ger.pdf> [retrieved on 20190116]
- LINDEMANN M ET AL: "Robot goniophotometry at PTB", METROLOGIA, INSTITUTE OF PHYSICS PUBLISHING, BRISTOL, GB, vol. 52, no. 2, 5 February 2015 (2015-02-05), pages 167 - 194, XP020282040, ISSN: 0026-1394, [retrieved on 20150205], DOI: 10.1088/0026-1394/52/2/167

## Beschreibung

Die Erfindung betrifft ein Verfahren zur räumlichen Charakterisierung des optischen Abstrahlverhaltens einer Lichtquelle, die ortsfest in einer Positioniereinrichtung eingespannt ist, mittels einer ortsfest zu einem Weltkoordinatensystem angeordneten Leuchtdichtemesskamera, wobei die Lichtquelle zwischen einer ersten Ist-Messposition und mindestens einer weiteren Ist-Messposition entlang einer kinematischen Kette der Positioniereinrichtung im Weltkoordinatensystem bewegt wird. Ferner betrifft die Erfindung die Anwendung eines solchen Verfahrens für die photometrische Vermessung von Scheinwerfern

Für die Charakterisierung der optischen Eigenschaften von Lichtquellen, insbesondere von Lampen und Leuchten, ist deren Abstrahlverhalten interessant, insbesondere die Lichtstärkeverteilung, auch als Lichtstärkeverteilungskörper oder Lichtstärkeverteilungskurve (LVK) bezeichnet.

Bei der Messung der LVK von Scheinwerfern werden besonders hohe Anforderungen an die räumliche Auflösung der Messtechnik gestellt, da hier große Gradienten in der LVK eine sehr genaue Positionierung des Objektes von üblicherweise 0,01° erfordern, um die Messpunkte ausreichend präzise im Objektkoordinatensystem zu erfassen.

Scheinwerfer werden in vielen Gebieten der Lichttechnik verwendet. Hierzu zählen zum Beispiel Fahrzeugscheinwerfer, Bühnenscheinwerfer, Straßenleuchten, Signalleuchten des Bahn- und Straßenverkehrs oder auch Leucht- und Positionsfeuer der Flug- und Schiffstechnik.

Hier haben sich verschiedene Verfahren etabliert, die unter anderem in die Normen EN 13032 Teil 1 und Teil 4, die CIE 121 und für den Bereich der Fahrzeugtechnik in die ECE Regelungen R1 und weitere sowie in den Federal Motor Vehicle Safety Standard sowie CCC basierend auf Guobiao Standards eingeflossen sind.

Zur direkten lichttechnischen oder photometrischen Vermessung von Scheinwerfern werden Goniophotometer eingesetzt, bei denen in einem definierten Abstand zum Scheinwerfer ein Photosensor (Photometerkopf) angeordnet ist und von diesem bestrahlt wird. Zur räumlichen Erfassung des Abstrahlverhaltens wird der Scheinwerfer um mindestens eine Drehachse gedreht. Bei einem als Leuchtenwender ausgebildeten Goniophotometer wird der Scheinwerfer bei der photometrischen Vermessung um zwei zueinander orthogonale Drehachsen gedreht, die sich in einem Drehzentrum schneiden.

Bei einem derart ausgebildeten Goniophotometer wird ein Objektkoordinatensystem, das hier und im Folgenden stets bezogen auf das zu vermessende Objekt, beispielhaft bezogen auf den Scheinwerfer oder allgemein auf eine von dem Goniophotometer gehaltene Leuchte, definiert ist, relativ zu dem Weltkoordinatensystem bewegt, wenn das Objekt um mindestens eine Drehachse gedreht wird.

Aus den Abmessungen und aus dem Gewicht von Scheinwerfern, beispielsweise von Fahrzeugscheinwerfern, inklusive der notwendigen steifen Halterungen in Kombination mit der hohen Positioniergenauigkeit ergeben sich sehr hohe Anforderungen an die mechanische Genauigkeit und Belastbarkeit, beispielsweise die Biege- und Verwindungssteifigkeit, solcher Goniophotometer.

Bei der indirekten photometrischen Vermessung wird die von dem Scheinwerfer emittierte Strahlung durch ein Medium aufgefangen, das in einem hinreichend großen Abstand im Strahlengang des Scheinwerfers angeordnet ist. Derartige Medien sind diffus reflektierend oder streuend ausgebildet und vorzugsweise spektral neutral. Mit einem solchen indirekten photometrischen Messverfahren kann das diffus reflektierende oder streuende Medium mit einem bildgebenden Verfahren in einem einzigen Belichtungsschritt erfasst werden. Dadurch ist eine gegenüber der punktweisen, sequenziellen Erfassung einer LVK mittels eines Goniophotometers schnellere Messung möglich.

Mittels einer Leuchtdichtemesskamera wird ein Teillichtstrom des Scheinwerfers auf dem bestrahlten Medium erfasst. Das Medium kann in einem Durchlichtstrahlengang, das heißt: transmittierend zwischen der Leuchtdichtemesskamera und dem Scheinwerfer, oder in einem Auflichtstrahlengang, das heißt: das Licht des Scheinwerfers reflektierend, angeordnet sein. Das Medium kann als gekrümmte oder ebene Fläche ausgebildet sein.

Aus der von der Leuchtdichtemesskamera erfassten, am bestrahlten Medium gestreuten oder reflektieren Leuchtdichteverteilung kann unter Auswertung der geometrischen Zusammenhänge zwischen der Leuchtdichtemesskamera, dem Medium und dem Scheinwerfer die LVK bestimmt werden.

Es sind auch inkrementelle Verfahren bekannt, bei denen mehrere Teil-LVKs in unterschiedlicher Winkellage des Scheinwerfers relativ zum Medium erfasst werden und daraus eine Gesamt-LVK ermittelt wird. Dabei sind sowohl eine geometrische Transformation zur Korrektur beispielsweise einer Verzerrung, Gleichrichtung und/oder Koordinatentransformation, als auch eine photometrische Transformation, mit der Leuchtdichtewerte in Beleuchtungsstärke- oder Lichtstärkewerte überführt werden, auszuführen.

Es sind dabei auch Messaufbauten und Messverfahren bekannt, bei denen der Scheinwerfer mittels eines Goniometers relativ zum Medium um eine oder um mehrere Achsen geschwenkt wird. Auch derartige Goniometer unterliegen hohen Genauigkeitsanforderungen, da eine an dem Goniometer eingestellte Winkellage des Messobjekts (Scheinwerfer) über die geometrische und/oder die photometrische Transformation in die ermittelte LVK eingeht.

Das Dokument DE 10 2014 430 A1 beschreibt ein Verfahren und ein Gonioradiometer zur richtungsabhängigen Messung mindestens einer lichttechnischen oder radiometrischen Kenngröße einer optischen Strahlungsquelle. Dabei wird die Ausstrahlungsrichtung der lichttechnischen oder radiometrischen Kenngröße unter Verwendung eines Ebenensystems beschrieben, dessen Ebenen sich in einer Schnittgeraden schneiden, die durch den Strahlungsschwerpunkt der Strahlungsquelle geht, und unter Verwendung eines Abstrahlwinkels beschrieben, der die Abstrahlrichtung innerhalb einer betrachteten Ebene angibt. Ein Sensor oder die Strahlungsquelle wird bei der Messung derart bewegt, dass der Sensor Messwerte aufnimmt, die die lichttechnische oder radiometrische Kenngröße auf einer Kugeloberfläche um den Strahlungsschwerpunkt der Strahlungsquelle angeben. Es ist vorgesehen, dass der Sensor oder die Strahlungsquelle an einem Mehr-Achsen-Schwenkarm-Roboter befestigt ist und der Roboter während eines Messvorgangs, bei dem Messwerte erfasst werden, die unterschiedliche Abstrahlwinkel innerhalb einer betrachteten Ebene des Ebenensystems oder unterschiedliche Ebenen bei einem betrachteten Abstrahlwinkel betreffen, um nur genau eine seiner Achsen verschwenkt wird.

Das Dokument DE 2018 208 203 A1 beschreibt Targetkörper, aufweisend eine Mehrzahl von Markern, die gemeinsam ein Target für eine optische Erfassung und für eine Ermittlung einer Position und/oder einer Ausrichtung des Targetkörpers aus den erfassten Markern bilden, insbesondere zum Ermitteln einer Position und/oder einer Ausrichtung, eines beweglichen Teils eines Koordinatenmessgeräts, eines Roboters, einer Material-Auftragsmaschine oder einer Werkzeugmaschine, wobei der Targetkörper eine Mehrzahl von Oberflächenbereichen aufweist, die Oberflächenbereiche in unterschiedliche Richtungen orientiert sind, in den Oberflächenbereichen jeweils zumindest einer der Marker angeordnet ist. Das Dokument DE 2018 208 203 A1 beschreibt ferner eine Anordnung mit einem derartigen Targetkörper und ein Verfahren zum Ermitteln einer Position und/oder einer Ausrichtung eines Targetkörpers.

Das Dokument DE 10 2015 201 093 A1 beschreibt ein Verfahren und Gonioradiometer zur richtungsabhängigen Messung mindestens einer lichttechnischen oder radiometrischen Kenngröße einer optischen Strahlungsquelle. Es ist vorgesehen, dass mindestens zwei fest installierte Sensoren eingesetzt werden, die bei einer Messung simultan Messwerte bereitstellen.

Die Veröffentlichung Chr. Schwanengel: "Gegenüberstellung von Messtechniken zur Messung von Lichtstärkeverteilungen und Lichtstärkeverteilungsausschnitten", online abrufbar unter URL:https://www.technoteam.de/e6009/e6311/e5983/pb_download5985/LVK_Messtec hniken_ger.pdf beschreibt Vorrichtungen und Verfahren zur Messung der Lichtstärke mit einer Leuchtdichtemesskamera.

Das Dokument US 2019/0362519 A1 beschreibt Messmarkenkörper mit einer Mehrzahl von Messmarken, die für eine optische Erfassung und zur Positions- und/oder Lagebestimmung insbesondere eines beweglichen Teils an einer Koordinatenmessmaschine, einem Roboter, einer Materialbearbeitungsmaschine oder eines Maschinenwerkzeugs eingerichtet sind. Das Dokument beschreibt ferner eine Vorrichtung umfassend einen solchen Messmarkenkörper sowie ein Verfahren zur Positions- und/oder Lagebestimmung desselben.

Die Veröffentlichung Lindemann et al.: "Robot goniophotometry at PTB", Metrologia, Institute OfPhysics Publishing, Bristol, GB, Bd. 52, Nr. 2, 5. Februar 2015, Seiten 167-194 DOI: 10.1088/0026-1394/52/2/167 beschreibt eine Vorrichtung und ein Verfahren zur photometrischen Vermessung mittels Robotern, wobei ein erster Roboter eine zu vermessende Lichtquelle und zwei weitere Roboter jeweils ein Photometer tragen, mit denen eine von der Lichtquelle emittierte Lichtstärke simultan vermessen wird.

Das Dokument DE 10 2015 201 093 A1 beschreibt ein Verfahren und Gonioradiometer zur richtungsabhängigen Messung mindestens einer lichttechnischen oder radiometrischen Kenngröße einer optischen Strahlungsquelle. Es ist vorgesehen, dass mindestens zwei fest installierte Sensoren eingesetzt werden, die bei einer Messung simultan Messwerte bereitstellen.

Der Erfindung liegt die Aufgabe zu Grunde, ein verbessertes Verfahren zur räumlichen Charakterisierung des Abstrahlverhaltens einer mittels einer Positioniereinrichtung relativ zu einem Weltkoordinatensystem bewegten Lichtquelle anzugeben.

Die Aufgabe wird erfindungsgemäß gelöst durch ein Verfahren mit den Merkmalen des Anspruchs 1.

Zudem liegt der Erfindung die Aufgabe zu Grunde, die Anwendung eines solchen Verfahrens für eine verbesserte photometrische Vermessung eines Scheinwerfers anzugeben. Diese Aufgabe wird erfindungsgemäß durch die Merkmale des Anspruchs 15 angegeben.

Vorteilhafte Ausgestaltungen der Erfindung sind Gegenstand der Unteransprüche.

Bei einem Verfahren zur photometrischen Vermessung einer Lichtquelle ist diese in einer Positioniereinrichtung eingespannt. Die Positioniereinrichtung ist zur Bewegung der Lichtquelle zwischen Ist-Messpositionen eingerichtet, die relativ zu einem Weltkoordinatensystem angegeben werden. Bevorzugt ist die Positioniereinrichtung zum Schwenken der Lichtquelle um Schwenkachsen eingerichtet, die sich in einem Drehzentrum schneiden können.

Fest auf die eingespannte Lichtquelle bezogen ist ein Objektkoordinatensystem definiert.

Die photometrische Vermessung wird mittels einer ortsfest zu dem Weltkoordinatensystem angeordneten Leuchtdichtemesskamera vorgenommen. An Stelle einer Leuchtdichtemesskamera kann auch ein punktweise messender Sensor, beispielsweise ein Photometer, zur photometrischen Vermessung eingesetzt werden, indem beispielsweise die Lichtquelle gegenüber dem punktweise messenden Sensor scannend mit ausreichend dichten Messabständen zwischen den Messpunkten bewegt wird.

In dem Strahlengang von der Lichtquelle zur Leuchtdichtemesskamera kann ein reflektierendes und/oder streuendes Medium derart angeordnet sein, dass das Medium von der Lichtquelle beleuchtet und das von dem Medium reflektierte und/oder gestreute Licht von der Leuchtdichtemesskamera erfasst wird. Mit anderen Worten: die photometrische Vermessung kann indirekt erfolgen.

Es ist aber auch möglich, dass die Leuchtdichtemesskamera von der Lichtquelle direkt beleuchtet wird oder dass die Leuchtdichtemesskamera die Leuchtdichteverteilung der Lichtquelle direkt erfasst.

Die Lichtquelle wird zwischen einer ersten Ist-Messposition und mindestens einer weiteren Ist-Messposition entlang einer kinematischen Kette der Positioniereinrichtung im Weltkoordinatensystem bewegt. Die kinematische Kette reicht von einem ortsfest zu dem Weltkoordinatensystem angeordneten Element der Positioniereinrichtung, beispielsweise einem Fuß, bis zu einem Element, in dem in starrer Lage die Lichtquelle eingespannt ist und das beispielsweise als eine Haltevorrichtung ausgebildet ist.

Die Positioniereinrichtung kann eine Mehrzahl von Maschinenkoordinatensystemen aufweisen, die gemäß der kinematischen Kette gegeneinander bewegt (verschoben und/oder gedreht) werden können. Insbesondere weist die Positioniereinrichtung ein Haltekoordinatensystem auf, das auf die Haltevorrichtung bezogen ist, die am Ende der kinematischen Kette liegt.

Für eine mechanisch steife Haltevorrichtung, in welcher die Lichtquelle während der Messung hinreichend stabil fixiert ist, sind das (auf die Lichtquelle bezogene) Objektkoordinatensystem und das (auf die Haltevorrichtung bezogene) Haltekoordinatensystem durch eine konstante Transformation miteinander verknüpft, die sich als konstante Pose des Objektkoordinatensystems relativ zum Haltekoordinatensystem beschreiben lässt.

Es ist aber auch möglich, dass, beispielsweise durch elastische Verformung der Haltevorrichtung, Lage und/oder Ausrichtung des Objektkoordinatensystems, d.h. die Pose, relativ zum Haltekoordinatensystem während der Messung variieren.

In jeder Ist-Messposition wird bei eingeschalteter Lichtquelle mittels der Leuchtdichtemesskamera ein Leuchtdichtemessbild aufgenommen. Das Leuchtdichtemessbild beschreibt die räumliche Verteilung einer photometrischen Kenngröße in einer Messfläche. Eine Messfläche kann beispielsweise durch die Auffangebene eines planen, diffus reflektierenden oder diffus streuenden Mediums gebildet werden, das von der Lichtquelle bestrahlt wird. Eine Messfläche kann aber auch gekrümmt, beispielsweise sphärisch gekrümmt sein.

Bei der Aufnahme eines Leuchtdichtemessbildes in einer Ist-Messposition der Lichtquelle werden die Lage und/oder die Ausrichtung des Objektkoordinatensystems relativ zum Weltkoordinatensystem in direktem Bezug zum Weltkoordinatensystem ohne Bezugnahme auf die kinematische Kette der Positioniereinrichtung erfasst.

Als Lage wird der dreidimensionale Ortsversatz zwischen dem Objektkoordinatensystem und dem Weltkoordinatensystem bezeichnet. Als Ausrichtung wird die Drehung des Objektkoordinatensystems relativ zum Weltkoordinatensystem bezeichnet. Lage und Ausrichtung werden zusammen als Pose bezeichnet. Jede Ist-Messposition ist durch die Pose des Objektkoordinatensystems relativ zum Weltkoordinatensystem zum Zeitpunkt der Messung bestimmt.

Eine Erfassung der Lage und/oder der Ausrichtung des Objektkoordinatensystems wird als direkt und ohne Bezugnahme auf die kinematische Kette der Positioniereinrichtung bezeichnet, wenn sie unabhängig von der Erfassung von Parametern der Relativbewegung zwischen einzelnen Elementen der kinematischen Kette erfolgt.

Ein Vorteil des Verfahrens besteht darin, dass die Lage und insbesondere die Ausrichtung kostengünstig in direktem Bezug, d.h. ohne aufwändige Sensorik entlang der kinematischen Kette der Positioniereinrichtung, bestimmt werden können.

Ein weiterer Vorteil des Verfahrens besteht darin, dass sich mechanische und/oder sensorische charakteristische Eigenschaften entlang der kinematischen Kette, beispielsweise Verbiegung oder Torsionen nicht vollständig starrer Glieder, Spiel oder Ungenauigkeiten von Sensoren, nicht auf die Genauigkeit der Bestimmung einer Ist-Messposition auswirken.

Dies ist besonders vorteilhaft, da die charakteristischen mechanischen Eigenschaften der kinematischen Kette von den auftretenden Momenten des Messobjektes beeinflusst werden. Diese Momente sind abhängig von der Pose und der Massenverteilung des Messobjektes. Bei Kenntnis der Momentenverteilung können die charakteristischen Abweichungen zwar kompensiert werden, wo zu diese aber mit erhöhtem Aufwand erst bestimmt werden müssen. Dieser zusätzliche Aufwand entfällt bei diesem Verfahren der direkten Bestimmung der Pose des Objektkoordinatensystems im Weltkoordinatensystem.

Ein weiterer Vorteil des Verfahrens besteht darin, dass das Anfahren einer vorgegebenen Soll-Messposition mit großer Genauigkeit nicht erforderlich ist. Es ist vielmehr ausreichend, wenn eine Soll-Messposition mit geringer Genauigkeit angefahren, aber die tatsächlich erreichte Ist-Messposition durch direkten Bezug im Weltkoordinatensystem mit hoher Genauigkeit vermessen wird. Dadurch ist eine Positionierung der Lichtquelle auch mit weniger genauen und kostengünstigeren Positioniereinrichtungen möglich.

Eine Positioniereinrichtung weist eine zugesicherte Positioniertoleranz auf, die die maximale Abweichung einer tatsächlich angefahrenen Ist-Messposition von einer vorgegebenen (anzufahrenden) Soll-Messposition angibt. Demgegenüber weist die Erfassung der Lage und/oder der Ausrichtung des Objektkoordinatensystems relativ zum Weltkoordinatensystem eine zugesicherte Erfassungstoleranz auf, die die maximale Abweichung der tatsächlichen Lage und/oder Ausrichtung des Objektkoordinatensystems von der erfassten Lage und/oder Ausrichtung des Objektkoordinatensystems relativ zum Weltkoordinatensystem angibt.

Die Erfassung der Lage und/oder der Ausrichtung des Objektkoordinatensystems relativ zum Weltkoordinatensystem weist eine zugesicherte Erfassungstoleranz auf, die hinsichtlich mindestens eines Parameters kleiner als die zugesicherte Positioniertoleranz der Positioniereinrichtung ist.

Mit anderen Worten: die Lage und/oder die Ausrichtung des Objektkoordinatensystems relativ zum Weltkoordinatensystem wird in jeder Ist-Messposition in direktem Bezug zum Weltkoordinatensystem ohne Bezugnahme auf die kinematische Kette der Positioniereinrichtung mit einer Erfassungstoleranz erfasst, die hinsichtlich mindestens eines Parameters kleiner als die zugesicherte Positioniertoleranz der Positioniereinrichtung ist.

Ein Vorteil des Verfahrens besteht darin, dass eine kostengünstige Positioniereinrichtung mit einer höheren Positioniertoleranz verwendet wird, ohne die Genauigkeit der photometrischen Vermessung der Lichtquelle zu beeinträchtigen.

Bei dem Verfahren wird eine erforderliche Positioniertoleranz der Positioniereinrichtung ermittelt, welche ausreicht, dass eine Abfolge von Soll-Messpositionen derart angeordnet und angefahren werden kann, dass mit der zugeordneten Abfolge von tatsächlich erreichten, jeweils innerhalb der Positioniertoleranz um eine Soll-Messposition liegenden Ist-Messpositionen eine vollständige Erfassung der photometrischen Kenngröße in der Messfläche möglich ist.

Es wird eine Positioniereinrichtung mit einer Positioniertoleranz ausgewählt und zum Einspannen der Lichtquelle verwendet, die kleiner oder bevorzugt gleich der so ermittelten erforderlichen Positioniertoleranz ist.

Mit anderen Worten: es wird eine erforderliche Positioniertoleranz der Positioniereinrichtung ermittelt und eine Positioniereinrichtung mit einer Positioniertoleranz ausgewählt, die kleiner oder bevorzugt gleich der ermittelten erforderlichen Positioniertoleranz ist, wobei die erforderliche Positioniertoleranz derart ermittelt wird, dass eine Abfolge von Soll-Messpositionen derart angeordnet und angefahren werden kann, dass mit der zugeordneten Abfolge von tatsächlich erreichten, jeweils innerhalb der Positioniertoleranz um eine Soll-Messposition liegenden Ist-Messpositionen eine vollständige Erfassung der photometrischen Kenngröße in der Messfläche möglich ist

Ein Vorteil des Verfahrens besteht darin, dass eine kostengünstige Positioniereinrichtung mit einer hohen Positioniertoleranz verwendet wird, ohne die Genauigkeit der photometrischen Vermessung der Lichtquelle zu beeinträchtigen.

In einer Ausführungsform wird eine Positioniereinrichtung ausgewählt, die eine Positioniertoleranz von mindestens ±1 Millimeter, bevorzugt von mindestens ±5 Millimeter aufweist.

Ein Vorteil dieser Ausführungsform besteht darin, dass eine kostengünstige Positioniereinrichtung mit einer hohen Positioniertoleranz verwendet wird, ohne die Genauigkeit der photometrischen Vermessung der Lichtquelle zu beeinträchtigen.

Bei einer Ausführungsform des Verfahrens wird in fester Lage und Ausrichtung zum Weltkoordinatensystem ein Medium angeordnet, das zur diffusen Reflexion und/oder Streuung des von der Lichtquelle emittierten Lichtes eingerichtet ist. Beispielsweise kann ein solches Medium als diffus reflektierender Schirm oder als Streuscheibe ausgebildet sein.

Das Medium wird so angeordnet, dass es von der Lichtquelle beleuchtet wird und das diffus reflektierte und/oder gestreute Licht von der Leuchtdichtemesskamera in einem Leuchtdichtemessbild aufgenommen wird.

Der Vorteil einer derartigen indirekten photometrischen Vermessung besteht darin, dass ein relativ großes Segment der Lichtverteilung mit einer einzigen Messung erfasst werden kann. Die Größe des Segmentes hängt von der realisierten Größe des Mediums ab.

Bei einer Ausführungsform der Erfindung kann die Leuchtdichtemesskamera direkt, das heißt: ohne Hinzunahme eines Mediums, die Lichtquelle erfassen. Bei dieser Ausführungsform wird die Messfläche auf einer der Leuchtdichtemesskamera zugewandten Oberfläche der Lichtquelle angeordnet.

In den Beleuchtungsstrahlengang von der Lichtquelle zum Medium (für die indirekte photometrische Vermessung) oder von der Lichtquelle zur Leuchtdichtemesskamera (für die direkte photometrische Vermessung) können zudem abbildende optische Bauelemente, beispielsweise Linsen und/oder Spiegel, zur Strahllenkung oder Strahlformung angeordnet sein.

Bei einer Ausführungsform des Verfahrens wird bei der photometrischen Vermessung die Lichtquelle um mindestens eine durch ein Drehzentrum verlaufende Achse geschwenkt. Dadurch ist eine besonders einfache Beurteilung der Lichtquelle möglich, da der Koordinatenursprung des auf die Lichtquelle bezogenen Objektkoordinatensystems mit dem Drehzentrum übereinstimmt und somit zur Gewinnung einer LVK keine zusätzliche Koordinatentransformation erforderlich ist.

Bei einer Ausführungsform des Verfahrens wird in einem ersten Schritt die Lage des Objektkoordinatensystems relativ zum Weltkoordinatensystem durch direkte Antastung mindestens einer Messmarke ermittelt. In einem zweiten Schritt wird die Ausrichtung des Objektkoordinatensystems relativ zum Weltkoordinatensystem bestimmt.

Ein Vorteil dieser Ausführungsform des Verfahrens besteht darin, dass für eine Beurteilung der Lichtquelle eine Bestimmung der Lage mit geringer Genauigkeit, beispielhaft mit einer zulässigen Positionierungenauigkeit von einem Millimeter, ausreichend und mit kostengünstigen Verfahren möglich ist. Dagegen ist eine Bestimmung der Ausrichtung mit großer Genauigkeit, beispielhaft mit einer zulässigen Winkelabweichung von 1/100 Grad, erforderlich. Durch die Trennung der Bestimmung der Positionierung von der Bestimmung der Ausrichtung kann eine insgesamt kostengünstige und ausreichend genaue Bestimmung der Pose und damit eine verbesserte photometrische Vermessung der Lichtquelle erreicht werden.

Bei einer Ausführungsform des Verfahrens werden die Lage und/oder die Ausrichtung des Objektkoordinatensystems durch Erfassung mindestens einer Messmarke mittels jeweils mindestens einer Referenzierungskamera bestimmt.

Messmarken und Referenzierungskameras sind kostengünstig verfügbar und können leicht an einer Positioniereinrichtung und/oder in einem umgebenden Raum angeordnet und betrieben werden. Zudem ist die Erfassung von Messmarken mit Referenzierungskameras besonders schnell, nahezu instantan, möglich.

Bei einer Ausführungsform des Verfahrens werden mindestens eine Referenzierungskamera ortsfest zum Weltkoordinatensystem und mindestens eine Messmarke ortsfest zum Objektkoordinatensystem angeordnet. Da eine Messmarke klein und leicht ausgebildet und leicht befestigt und gelöst werden kann, wird eine besonders einfache, kostengünstige und präzise Messung ermöglicht.

Bei einer Ausführungsform des Verfahrens werden mindestens eine Referenzierungskamera ortsfest zum Objektkoordinatensystem und mindestens eine Messmarke ortsfest zum Weltkoordinatensystem angeordnet. Bevorzugt wird mindestens eine Messmarke aus ortsfest im Weltkoordinatensystem angeordneten Raummerkmalen, beispielhaft Installationseinrichtungen oder Architekturmerkmalen, gebildet. Dadurch ist eine besonders leichte und flexible Erfassung der Pose des Weltkoordinatensystems möglich.

Bei einer Ausführungsform des Verfahrens ist mindestens eine Messmarke als aktive Messmarke zur Emission einer Strahlung eingerichtet, die von mindestens einer dieser Messmarke zugeordneten Referenzierungskamera erfassbar ist. Aktive Messmarken sind besonders gut in Bildern einer Referenzierungskamera zu erkennen und zu lokalisieren. Von verschiedenen aktiven Messmarken emittierte Strahlung kann spektral und/oder zeitlich unterscheidbar ausgebildet sein. Dadurch kann die Zuverlässigkeit bei der Erkennung von Messmarken verbessert werden.

Bei einer Ausführungsform des Verfahrens wird mindestens eine Auffangebene ortsfest im Weltkoordinatensystem angeordnet. Beim Anfahren einer Ist-Messposition wird jeweils die Lage des Objektkoordinatensystems bestimmt und die Ausrichtung des Objektkoordinatensystems aus der Vermessung einer unter bekannter Richtung relativ zum Objektkoordinatensystem abgestrahlten und auf der mindestens einen Auffangebene aufgefangenen modulierten, das heißt: orts- oder raumwinkelabhängig variierenden Beleuchtung ermittelt.

Ein Vorteil dieses Verfahrens besteht darin, dass durch Vermessung der Verzerrung einer in bekannter Weise modulierten Beleuchtung ein Winkel relativ zur Auffangebene sehr genau und einfach bestimmt werden kann.

Bei einer Ausführungsform des Verfahrens wird die modulierte Beleuchtung mittels eines diffraktiv-optischen Elements (DOE) als eine Projektionsmatrix umfassend mindestens eine Projektionsstruktur erzeugt. Eine Projektionsstruktur wird entlang jeweils eines Pilotstrahls auf eine Auffangebene projiziert.

Die Projektionsmatrix kann als Punktmatrix ausgebildet sein, wobei als Projektionspunkte ausgebildete Projektionsstrukturen in Abständen angeordnet sind.

Derartige Projektionsmatrizen sind besonders leicht zu erzeugen und können mit großer Genauigkeit ausgewertet werden, indem die auf der Auffangebene aufgefangene Projektionsmatrix mittels einer Kamera erfasst und die mindestens eine Projektionsstruktur im Bild der Kamera lokalisiert wird.

Die Projektionspunkte können in regelmäßigen, beispielsweise gleichen Abständen angeordnet sein. Mittels derartiger Projektionsmatrizen kann eine Lageveränderung der auf die Auffangebene projizierten Punktmatrix und/oder eine Änderung der Projektionsrichtung innerhalb eines vom Punktabstand abhängigen Bereiches mit hoher Genauigkeit bestimmt werden.

Die mindestens eine Projektionsstruktur kann auch in unregelmäßiger Weise örtlich moduliert (strukturiert) sein. Beispielsweise kann eine Projektionsstruktur so gewählt sein, dass sie eine zweidimensionale aperiodisch geformte Helligkeitsverteilung erzeugt, deren zweidimensionale Autokorrelationsfunktion vorzugsweise nur ein Maximum aufweist und besonders bevorzugt ähnlich einem Diracimpuls geformt ist. Mit derartig geformten Projektionsstrukturen kann eine Lageveränderung einer Projektion auf die Auffangebene über einen besonders großen Bereich eindeutig bestimmt werden.

In anderen Ausführungsformen ist die modulierte Beleuchtung als Streifen- oder Gitterprojektion ausgebildet. Aus dem Stand der Technik sind Verfahren bekannt, mit denen die Neigung einer optischen Achse, entlang der eine Streifen- oder Gitterprojektion auf eine Auffangebene projiziert wird, bezogen auf die Flächennormale der Auffangebene bestimmt werden kann.

Bei einer Ausführungsform des Verfahrens wird die modulierte Beleuchtung von der Lichtquelle abgestrahlt und direkt auf die Leuchtdichtemesskamera projiziert oder indirekt als auf ein Medium oder eine Auffangebene projizierte Leuchtdichte von der Leuchtdichtemesskamera aus aufgenommen.

Es werden Ist-Messpositionen angefahren, die jeweils innerhalb eines vorbestimmten Abstands um eine Soll-Messposition liegen, wobei in jeder Ist-Messposition jeweils mindestens ein Leuchtdichtemessbild aufgenommen wird.

Die Soll-Messpositionen sind so gewählt, dass sich mindestens zwei Leuchtdichtemessbilder überlappen, wobei der Versatz zwischen einander überlappenden Leuchtdichtemessbildern mittels eines Bildregistrierungsverfahrens ermittelt wird und daraus sowie aus den den Leuchtdichtemessbildern jeweils zugeordneten Ist-Messpositionen die jeweilige Ausrichtung des Objektkoordinatensystems ermittelt wird.

Ein Vorteil dieser Ausführungsform besteht darin, dass eine Richtungsbestimmung des Objektkoordinatensystems mit der vorhandenen Leuchtdichtemesskamera und somit ohne zusätzlichen Aufwand möglich ist.

Bei einer Ausführungsform des Verfahrens wird zu jeder Ist-Messposition jeweils eine Soll-Messposition durch Auswertung von Parametern der Positioniereinrichtung bestimmt. Die Lage und Ausrichtung des Objektkoordinatensystems werden ausgehend von der Soll-Messposition erfasst.

Ein Vorteil dieser Ausführungsform besteht darin, dass durch die Soll-Messposition eine näherungsweise Bestimmung der Ist-Messposition ermöglicht wird. Dadurch kann der Messbereich für die genaue Erfassung der Ist-Messposition in direktem Bezug (ohne Bezugnahme auf die kinematische Kette) verringert werden. Dadurch ist eine einfachere und zugleich genauere Erfassung der Ist-Messposition, und somit auch eine einfachere und genauere photometrische Vermessung möglich.

Bei einer Ausführungsform des Verfahrens wird die Positioniereinrichtung für das Anfahren einer Soll-Messposition jeweils derart angesteuert, dass eine Ist-Messposition innerhalb eines vorbestimmten Abstands von der jeweils zugeordneten Soll-Messposition erreicht wird. Die Ansteuerung kann beispielsweise iterativ durch schrittweise Verringerung des Abstands zwischen Ist-Messposition und Soll-Messposition erfolgen.

Ein Vorteil dieser Ausführungsform besteht darin, dass eine besonders hohe Genauigkeit bei der Positionierung der Lichtquelle erzielt wird. Dadurch ist eine besonders genaue photometrische Vermessung möglich.

Das beschriebene Verfahren kann zur photometrischen Vermessung eines Scheinwerfers angewendet werden. Scheinwerfer unterliegen besonders hohen Genauigkeitsvorgaben für eine photometrische Vermessung. In vorteilhafter Weise können diese besonders hohen Genauigkeitsvorgaben mit dem vorgeschlagenen Verfahren auch dann erreicht werden, wenn die Positioniereinrichtung eine höhere Ungenauigkeit beim Anfahren von Soll-Messpositionen aufweist, als dies für Verfahren nach dem Stand der Technik zulässig wäre.

Dadurch kann der apparative und verfahrenstechnische Aufwand verringert werden. Beispielsweise können Positioniereinrichtungen mit höherem mechanischem Spiel und geringerer Biege- und Verwindungssteifigkeit der Elemente der kinematischen Kette eingesetzt werden, als dies mit photometrischen Vermessungsverfahren nach dem Stand der Technik möglich wäre.

Insbesondere kann das beschriebene Verfahren zur photometrischen Vermessung eines Fahrzeugscheinwerfers angewendet werden. Für die photometrische Vermessung von Fahrzeugscheinwerfern sind ein einfacher, mit kostengünstigen Positioniereinrichtungen umsetzbarer Messablauf und zugleich eine hohe Genauigkeit und Reproduzierbarkeit besonders wichtig.

Ausführungsbeispiele der Erfindung werden im Folgenden anhand von Zeichnungen näher erläutert. Darin zeigen:
- Figur 1: schematisch eine als Goniometer ausgebildete Positioniereinrichtung zur Positionierung einer Lichtquelle nach dem Stand der Technik,
- Figur 2: schematisch eine als Industrieroboter ausgebildete Positioniereinrichtung mit daran angeordneten Messmarken,
- Figur 3: schematisch eine als Industrieroboter ausgebildete Positioniereinrichtung mit daran angeordneten Markierungsscheiben,
- Figur 4: schematisch eine als Industrieroboter ausgebildete Positioniereinrichtung mit daran angeordneten Referenzierungskameras,
- Figur 5: schematisch eine Positioniereinrichtung mit einer Pilotlichtquelle zur Projektion einer Punktematrix,
- Figur 6: schematisch eine optische Auffangeinrichtung zur teilweisen Erfassung einer projizierten Punktematrix,
- Figur 7: schematisch eine Haltevorrichtung mit einem Fahrzeugscheinwerfer in verschiedenen Ist-Messpositionen sowie
- Figur 8: schematisch aus verschiedenen Ist-Messpositionen aus aufgenommene Leuchtdichtemessbilder von einem Fahrzeugscheinwerfer.

Einander entsprechende Teile sind in allen Figuren mit den gleichen Bezugszeichen versehen.

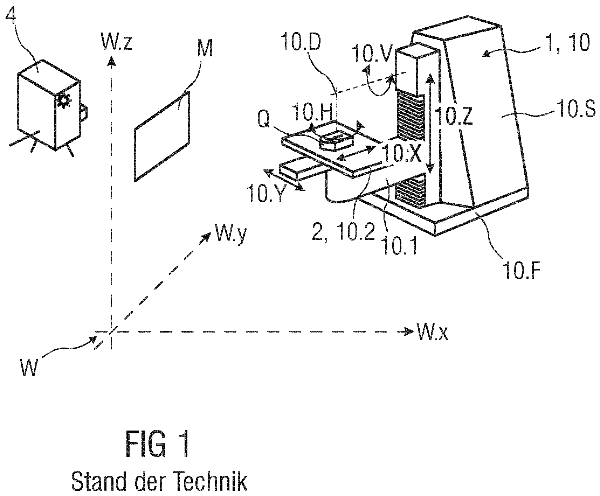

**Figur 1** zeigt eine Positioniereinrichtung 1 zur Positionierung einer Lichtquelle Q nach dem Stand der Technik. Beispielhaft ist die Positioniereinrichtung 1 als Goniometer 10 ausgebildet. Ein Fuß 10.F des Goniometers 10 steht ortsfest in einem kartesischen Weltkoordinatensystem W und trägt ein Stativ 10.S. Das Weltkoordinatensystem ist durch die Welt-x-Achse W.x, die Welt-y-Achse W.y und die Welt-z-Achse W.z bestimmt, die sich in einem Koordinatenursprung schneiden.

Das Goniometer 10 weist eine Haltevorrichtung 2 auf, die zur Aufnahme und lösbaren Befestigung einer Lichtquelle Q eingerichtet ist. Beispielhaft kann die Haltevorrichtung 2 als Halteplatte 10.2, bevorzugt als Lochrasterplatte, ausgebildet sein. Die Halteplatte 10.2 ist über einen Stativarm 10.1 mit dem Stativ 10.S verbunden.

Der Stativarm 10.1 ist um eine vertikale Rotationsachse 10.V relativ zum Stativ 10.S schwenkbar. Ferner weist der Stativarm 10.1 eine nicht näher dargestellte Drehvorrichtung auf, mittels der die daran angeordneten Halteplatte 10.2 um eine zum Stativarm 10.1 feste horizontale Rotationsachse 10.H drehbar ist, welche orthogonal zur vertikalen Rotationsachse 10.V ausgerichtet ist und diese in einem Drehzentrum 10.D schneidet.

Die Halteplatte 10.2 ist zudem entlang von drei zueinander orthogonalen Translationsachsen 10.X, 10. Y und 10.Z relativ zum Stativarm 10.1 derart verschiebbar, dass ein optisches Zentrum oder ein anderer Bezugspunkt einer von der Halteplatte 10.2 gehaltenen Lichtquelle in das Drehzentrum 10.D gebracht wird.

Dadurch kann die Lichtquelle Q im Drehzentrum 10.D um die Rotationsachsen 10.H, 10. V geschwenkt werden. Die Lichtquelle Q wird derart geschwenkt, dass der von der Lichtquelle Q abgegebene Lichtstrom mindestens teilweise auf ein Medium M fällt, das diffus reflektierend oder streuend ausgebildet sein kann. Dort erzeugt der Lichtstrom eine Beleuchtungsstärke, aus der eine Leuchtdichte des Mediums M resultiert, die mit einer Leuchtdichtemesskamera 4 bildauflösend gemessen werden kann.

Die Lage und Ausrichtung der Leuchtdichtemesskamera 4 und auch des Mediums M sind zueinander und zum Weltkoordinatensystem W bekannt und während der Vermessung der Lichtquelle Q fixiert. Ist zudem die Lage und Ausrichtung der Lichtquelle Q im Weltkoordinatensystem W bekannt, so kann aus der bildauflösend gemessenen Leuchtdichte des Mediums M ein Teil-Lichtstärkeverteilungskörper ermittelt werden, welcher die von der Lichtquelle Q emittierte Lichtstärkeverteilung in Abhängigkeit von einem Abstrahlwinkel angibt.

Dabei ist die Ermittlung des Teil-Lichtstärkeverteilungskörpers auf den Raumwinkelbereich beschränkt, unter dem von der Lichtquelle Q emittiertes Licht auf das Medium M trifft.

Durch Drehung der Lichtquelle Q um die Rotationsachsen 10.H, 10.V im Drehzentrum 10.D kann eine Mehrzahl von Teil-Lichtstärkeverteilungskörpern aufgenommen und daraus ein Lichtstärkeverteilungskörper ermittelt werden, der einen größeren Raumwinkelbereich für die Abstrahlwinkel abdeckt als die einzelnen Teil-Lichtstärkeverteilungskörper.

Nach dem Stand der Technik wird die Bestimmung der Lage und Ausrichtung der Lichtquelle Q durch die sich entlang der kinematischen Kette vom Fuß 10.F bis zur Halteplatte 10.2 mit der damit starr verbundenen Lichtquelle Q fortpflanzenden Positionier- und Lagebestimmungsfehler begrenzt. Zudem wird die Bestimmung der Lage und Ausrichtung der Lichtquelle Q durch unbekannte Abweichungen von der Modellannahme, beispielsweise durch unzureichende mechanische Steifigkeit des Stativarms 10.2, begrenzt.

Daher setzt eine Bestimmung der Lage und Ausrichtung der Lichtquelle Q nach dem Stand der Technik hochgenaue Sensoren entlang der kinematische Kette, vorliegend hochgenaue Sensoren zur Erfassung der entlang der Translationsachsen 10.X, 10. Y, 10.Z vorgenommenen Verschiebung der Halteplatte 10.2 relativ zum Stativarm 10.1 sowie zur Erfassung der Drehwinkel um die Rotationsachsen 10.V und 10.H voraus und ist selbst dann, beispielsweise infolge der Durchbiegung des zur ersten Translationsachse 10.X koaxialen Stativauslegers nur begrenzt genau möglich.

Daher besteht ein Bedarf an einer Vorrichtung und an einem Verfahren, mit der beziehungsweise mit dem ein Lichtstärkeverteilkörper einer Lichtquelle Q bestimmbar ist, welche entlang einer kinematischen Kette relativ zum Weltkoordinatensystem W bewegbar ist, ohne dass Störungen und Messfehler entlang der kinematischen Kette den ermittelten Lichtstärkeverteilkörper in seiner Genauigkeit und Zuverlässigkeit beschränken.

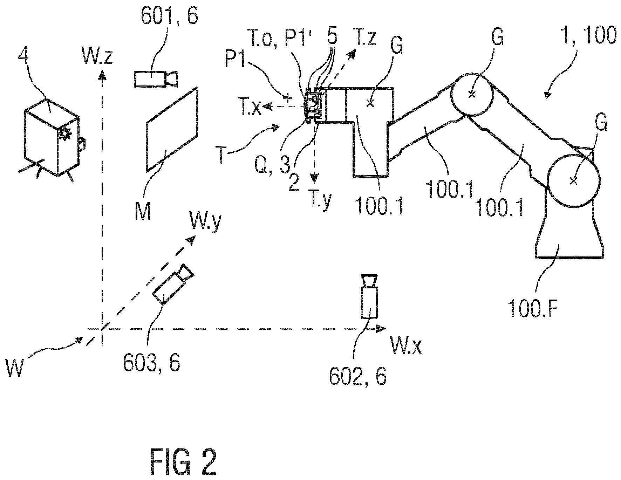

**Figur 2** zeigt eine weitere Positioniereinrichtung 1, die beispielhaft als Industrieroboter 100 ausgebildet ist. Der Industrieroboter 100 weist eine am freien Ende eines Armsegments 100.1 angeordnete Haltevorrichtung 2 auf.

Die Haltevorrichtung 2 ist bevorzugt als Plattform mit verschiedenen Befestigungsmöglichkeiten, beispielsweise Lochrasterplatte oder als Montagegestell ausgebildet und dafür eingerichtet, ein Objekt, vorzugsweise eine Lichtquelle Q, aufzunehmen und zu halten. Besonders bevorzugt ist die Haltevorrichtung 2 zur Aufnahme eines Scheinwerfers 3 eingerichtet.

Relativ zu dem von der Haltevorrichtung 2 gehaltenen Objekt ist ein kartesisches Objektkoordinatensystem T festgelegt, das durch die Objekt-x-Achse T.x, die Objekt-y-Achse T.y und die Objekt-z-Achse T.z bestimmt ist, die sich in einem Objektkoordinatensystem-Ursprung T.O schneiden. Beispielsweise kann, wenn das gehaltene Objekt eine Lichtquelle Q ist, das Objektkoordinatensystem T durch einen lichttechnischen Bezugspunkt und eine lichttechnische Bezugsachse bestimmt sein.

Der Industrieroboter 100 weist mehrere Gelenkachsen G auf, um die ein einzelnes Armsegment 100.1 rotiert oder um die zwei miteinander verbundene Armsegmente 100.1 gegeneinander verdreht werden können. Durch Drehung um die Gelenkachsen G kann die Haltevorrichtung 2 in einem kartesischen Weltkoordinatensystem W bewegt werden. Ferner kann durch Drehung um die Gelenkachsen G die Haltevorrichtung 2 relativ zum Weltkoordinatensystem W entlang von mindestens einer Achse gedreht werden. Bevorzugt ist der Industrieroboter 100 so ausgebildet, dass ein von der Haltevorrichtung 2 gehaltener Scheinwerfer 3 um einen Drehpunkt entlang von zwei Achsen unabhängig geschwenkt und relativ zu diesem Drehpunkt verschoben werden kann.

Mit anderen Worten: durch Drehung um die Gelenkachsen G wird entlang einer kinematischen Kette von einem Fuß 100.F des Industrieroboters 100, der ortsfest im Weltkoordinatensystem W steht, bis zur Haltevorrichtung 2 eine Veränderung des Objektkoordinatensystems T gegenüber dem Weltkoordinatensystem W bewirkt. Die kinematische Kette ist durch die Relativdrehwinkel von Armsegmenten 100.1, die über jeweils ein Gelenk mit einer Gelenkachse G verbunden sind, bestimmt.

Ein Industrieroboter 100 weist eine besonders große Anzahl von Freiheitsgraden auf und ist besonders flexibel bewegbar und programmierbar. Es kann aber an Stelle eines Industrieroboters 100 jede andere Art von bewegbarer Positioniereinrichtung 1 eingesetzt werden, die über eine Haltevorrichtung 2 verfügt und eine Umpositionierung eines davon gehaltenen, zu vermessenden Objektes im Raum ermöglicht. Insbesondere können als Positioniereinrichtung 1 auch Goniometer 10 in der in Figur 1 dargestellten Bauart eingesetzt werden.

Wird eine von der Haltevorrichtung 2 gehaltene Lichtquelle Q, beispielsweise ein Scheinwerfer 3, von einer Messeinrichtung vermessen, die ortsfest zum Weltkoordinatensystem W angeordnet ist, so ist es für die Einordnung der Messungen der Messeinrichtung erforderlich, die Lage und die Ausrichtung des Objektkoordinatensystems T relativ zum Weltkoordinatensystem W zu bestimmen. Die Messeinrichtung ist zur Bestimmung des Lichtstärkeverteilungskörpers der Lichtquelle Q über mindestens einen Teilbereich des Abstrahlungsraumwinkels eingerichtet. Vorzugsweise ist die Messeinrichtung zur indirekten Bestimmung mindestens eines Teil-Lichtstärkeverteilungskörpers eingerichtet.

In der vorliegenden Ausführungsform umfasst die Messeinrichtung eine Leuchtdichtemesskamera 4, die zur Erfassung mindestens einer photometrischen Kenngröße eingerichtet ist, sowie ein Medium M.

Mittels des Industrieroboters 100 wird der Scheinwerfer 3 derart ausgerichtet und positioniert, dass der von ihm emittierte Lichtstrom mindestens teilweise auf das Medium M trifft.

Das Medium M kann als diffus und spektral neutral reflektierende Fläche ausgebildet sein. In diesem Fall ist die Leuchtdichtemesskamera 4, bezogen auf das Medium M, im gleichen Halbraum angeordnet wie der Scheinwerfer 3 und zur Aufnahme des von dem Medium M diffus reflektierten Lichtes eingerichtet. Die reflektierende Fläche kann eben (plan) oder auch gekrümmt, beispielsweise sphärisch sein.

Das Medium M kann auch als Streuscheibe ausgebildet sein. Dann ist die Leuchtdichtemesskamera 4, bezogen auf das Medium M, gegenüberliegend dem Scheinwerfer 3 angeordnet und zur Aufnahme des an dem Medium M gestreuten Lichtes eingerichtet.

Die Anordnung und Ausrichtung der Leuchtdichtemesskamera 4 sowie des Mediums M zueinander und relativ zum Weltkoordinatensystem W sind bekannt oder werden erfasst.

Zur Zuordnung der mit der Leuchtdichtemesskamera 4 pixelweise in einem Pixelkoordinatensystem erfassten photometrischen Kenngröße (beispielsweise der Leuchtdichte) ist es somit erforderlich und hinreichend, die Lage und Ausrichtung des Objektkoordinatensystems T relativ zum Weltkoordinatensystem W zu bestimmen. Die Lage des Objektkoordinatensystems T ist durch die Lage des Objektkoordinatensystem-Ursprungs T.O, angegeben in Koordinatenwerten des Weltkoordinatensystems W, bestimmt. Die Ausrichtung des Objektkoordinatensystems T ist durch die Lage mindestens einer Achse T.x, T.y, T.z, angegeben als Richtungsvektor in Koordinatenwerten des Weltkoordinatensystems W, bestimmt.

Nach dem Stand der Technik wird die Lage und Ausrichtung des Objektkoordinatensystems T relativ zum Weltkoordinatensystem W dadurch bestimmt, dass die Drehwinkel entlang der Gelenkachsen G des Industrieroboters 100 erfasst und in ein mechanisches Bewegungsmodell des Industrieroboters 100 eingesetzt werden, das die kinematische Kette zwischen dem Fuß 100.F und der Haltevorrichtung 2 beschreibt. Die Drehwinkel werden im Stand der Technik durch Drehwinkelgeber, beispielsweise rotatorische inkrementelle Geber, erfasst.

Demgegenüber wird erfindungsgemäß vorgeschlagen, die Lage und Ausrichtung des Objektkoordinatensystems T relativ zum Weltkoordinatensystem W durch eine direkte Referenzierung im Weltkoordinatensystem W ohne Bezugnahme auf die kinematische Kette zu bestimmen, wobei in einem ersten Schritt durch direkte Referenzierung die Lage des Objektkoordinatensystem-Ursprungs T.O als Punkt in Koordinatenwerten des Weltkoordinatensystems W bestimmt wird und in einem zweiten Schritt durch direkte Referenzierung die Ausrichtung des Objektkoordinatensystems T als Richtungsvektor in Koordinatenwerten des Weltkoordinatensystems W bestimmt wird.

Ein Vorteil des erfindungsgemäßen Verfahrens besteht darin, dass der Aufwand zur Vermeidung oder Korrektur von Eigenverformungen einer Positioniereinrichtung 1 gegenüber dem Stand der Technik wesentlich verringert werden kann. Insbesondere können die Anforderungen an die mechanische Steifigkeit von Elementen der Positioniereinrichtung 1, die entlang der kinematischen Kette gegeneinander bewegt werden, entspannt werden. Dadurch können Kosten, Platz und Gewicht an einer Positioniereinrichtung 1 eingespart werden.

Zudem sind abtriebsseitig angeordnete Lage- und Positionssensoren für eine genaue Bestimmung der relativen Lage aller entlang der kinematischen Kette verknüpften, gegeneinander beweglichen Elemente einer Positioniereinrichtung 1 durch das erfindungsgemäße Verfahren nicht mehr erforderlich. Dadurch reduzieren sich die Kosten und der Konstruktionsaufwand für eine derartige Positioniereinrichtung 1.

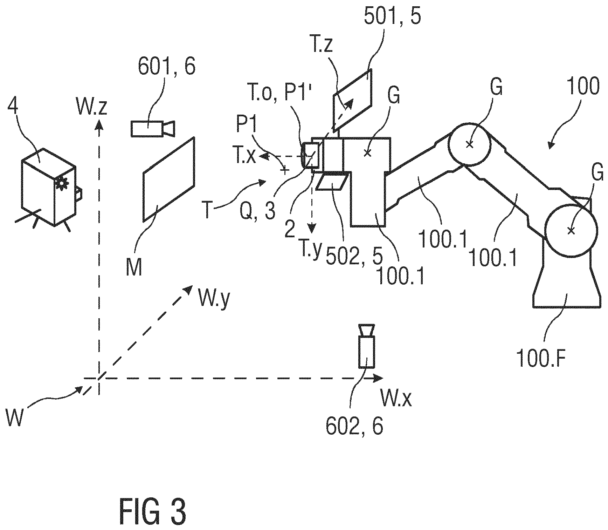

Zunächst werden anhand der Figuren 2 und 3 Ausführungsbeispiele für eine Bestimmung der Lage des Objektkoordinatensystem-Ursprungs T.O erläutert.

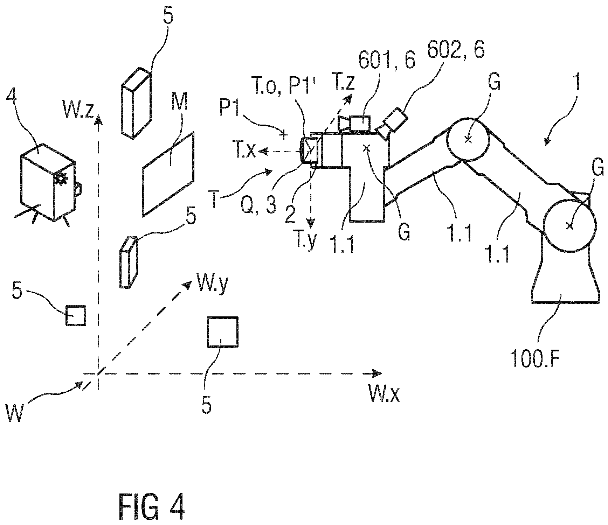

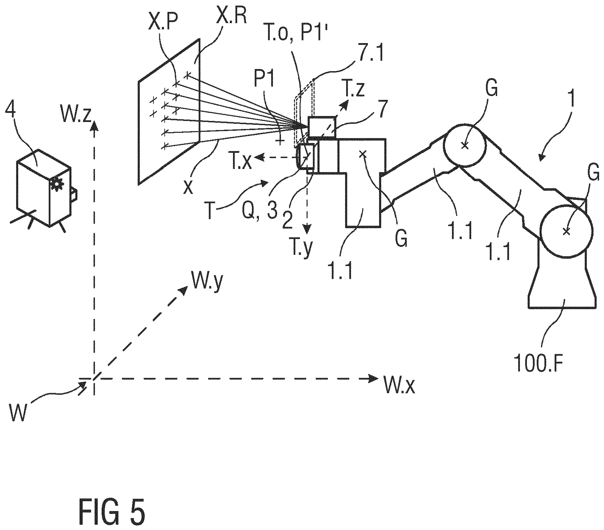

Anschließend werden anhand der Figuren 4 und 5 Ausführungsbeispiele für eine Bestimmung der Ausrichtung des Objektkoordinatensystems T erläutert.

Die Ausführungsbeispiele für eine Bestimmung der Ausrichtung des Objektkoordinatensystems T und für eine Bestimmung der Lage des Objektkoordinatensystem-Ursprungs T.O werden nur der besseren Verständlichkeit wegen getrennt erklärt. Bevorzugte Ausführungen der Erfindung weisen Merkmale sowohl von mindestens einem Ausführungsbeispiel für eine Bestimmung der Ausrichtung des Objektkoordinatensystems T als auch von mindestens einem Ausführungsbeispiel für eine Bestimmung der Lage des Objektkoordinatensystem-Ursprungs T.O auf.

**Figur 2** zeigt ein Ausführungsbeispiel, bei dem eine Referenzierung des Objektkoordinatensystems T dadurch vorgenommen wird, dass Messmarken 5 an dem in der Haltevorrichtung 2 gehaltenen Scheinwerfer 3, somit ortsfest zum Objektkoordinatensystem T, angeordnet sind.

Die Messmarken 5 können als passive Messmarken 5 ausgestaltet sein. Beispielsweise können passive Messmarken 5 durch an dem Scheinwerfer 3 (oder einer anderen zu vermessenden Lichtquelle Q) bereits vorhandene Strukturen wie Kanten, Ecken oder Bedruckungen gebildet werden. Passive Messmarken können auch durch an dem Scheinwerfer 3 aufgeklebte Aufkleber mit optisch gut erkennbaren, scharf begrenzten und kontraststarken Strukturen, beispielsweise mit in schwarz-weiß gedruckten QR-Codes oder aufgedruckten schwarz-weiß kontrastierenden Kreisen oder Kreisringen gebildet sein.

Passive Messmarken 5 können auch dreidimensional, beispielsweise als Kugeln, ausgebildet sein. Kugelförmige passive Messmarken 5 weisen den Vorteil auf, dass sie unabhängig vom Betrachtungswinkel verzerrungsfrei mit der Kontur eines Kreises aufgenommen werden. Dadurch wird eine besonders hohe Präzision bei der Lokalisierung kugelförmiger passiver Messmarken 5 in einem Kamerabild ermöglicht.

Die Messmarken 5 können alternativ oder zusätzlich auch als aktive Messmarken 5 ausgestaltet sein, welche Licht im sichtbaren oder nicht sichtbaren Wellenlängenbereich emittieren, das von einer Referenzierungskamera 601 bis 603 aufgenommen werden kann.

Derartige aktive Messmarken 5 weisen eine eindeutige Struktur auf, beispielsweise einen durch eine Blende begrenzten kreisrunden Lichtaustritt, eine kugelförmige Struktur, eine punktförmige Struktur mit einem sehr eng begrenzten Lichtaustritt oder eine näherungsweise richtungsunabhängige Abstrahlcharakteristik, welche beispielsweise mittels einer Streuscheibe oder einer mattierten kugelförmigen Oberfläche erzielt werden kann.

Bevorzugt wird eine Erkennung und Zuordnung von aktiven Messmarken 5 in einem Bild dadurch verbessert und erleichtert, dass die spektrale Charakteristik des emittierten Lichts eindeutig und gut abgrenzbar von dem Licht gewählt wird, welches von der zu vermessenden Lichtquelle Q, beispielsweise von dem Scheinwerfer 3 emittiert wird. Eine spektrale Abtrennung kann beispielsweise mittels eines wellenlängenabhängigen Strahlteilers oder mittels eines vor einer Referenzierungskamera 601 bis 603 angeordneten spektralen Filters erzielt werden.

Eine Erkennung und Zuordnung von aktiven Messmarken 5 kann ferner dadurch verbessert und erleichtert werden, dass die Emission von Licht durch die aktiven Messmarken 5 zeitlich moduliert, beispielsweise getastet wird.

Im Umfeld des Industrieroboters 100 sind drei Referenzierungskameras 601, 602, 603 ortsfest zum Weltkoordinatensystem W derart angeordnet, dass in einer Soll-Messposition P1 des Objektkoordinatensystem-Ursprungs T.O jede Messmarke 5 von einer Mehrzahl von Referenzierungskameras 601 bis 603 erfasst wird.

Die Referenzierungskameras 601 bis 603 sind in ihren Posen, das heißt: im Ort ihrer jeweiligen Auffangebene und in der Ausrichtung ihrer jeweiligen optischen Achse, relativ zum Weltkoordinatensystem W bekannt und während der Vermessung des Scheinwerfers 3 stabil. Zudem sind die Referenzierungskameras 601 bis 603 in ihren jeweiligen Abbildungseigenschaften bekannt. Insbesondere sind die jeweiligen Haupt- und Verzeichnungsparameter der Referenzierungskameras 601 bis 603 bekannt. Verfahren zur Bestimmung der Haupt- und Verzeichnungsparameter von Kameras sind aus dem Stand der Technik bekannt.

Die aktiven und/oder passiven Messmarken 5 sind so ausgebildet, dass sie in einem von einer Referenzierungskamera 601 bis 603 aufgenommenen Bild eindeutig identifizierbar sind und eine scharfe Struktur, beispielsweise eine hohe Ortsfrequenz und/oder mindestens eine scharfe Kante, aufweisen.

Ferner ist ein nicht näher dargestellter Kalibriermaßstab, dessen Länge entlang mindestens einer Ausdehnung absolut (in Millimetern) bekannt ist, für die Referenzierungskameras 601 bis 603 sichtbar angeordnet. Ein solcher Kalibriermaßstab kann beispielsweise durch einen bekannten (vermessenen) Abstand zwischen zwei Messmarken 5 gebildet sein.

Da die Messmarken 5 ortsfest im Objektkoordinatensystem T angeordnet sind und die Referenzierungskameras 601 bis 603 ortsfest im Weltkoordinatensystem W angeordnet sind, kann durch Vergleich der Position des Abbildes einer Messmarke 5 in einem Bild einer ersten Referenzierungskamera 601 mit der Position des Abbildes derselben Messmarke 5 in einem Bild mindestens einer weiteren Referenzierungskamera 602, 603 die Lage dieser Messmarke 5 in Bezug auf das Weltkoordinatensystem W durch Triangulation ermittelt werden.

Verfahren zur Erkennung der Position des Abbildes einer Messmarke 5 in einem Kamerabild und zur Triangulation, das heißt: zur Ermittlung einer Position einer Messmarke 5 in dem Weltkoordinatensystem W, die zu den in den mehreren Kamerabildern detektierten Positionen der Abbilder dieser Messmarke 5 korrespondiert, sind aus dem Stand der Technik bekannt. Insbesondere sind Verfahren der Nahbereichsphotogrammetrie bekannt.

Ist die Soll-Messposition P1 mittels der den Gelenkachsen G zugeordneten Drehwinkelgeber näherungsweise erreicht, werden die Messmarken 5 von den Referenzierungskameras 601, 602, 603 aufgenommen, identifiziert und mit einem Triangulationsverfahren in ihrer Lage im Weltkoordinatensystem W vermessen. Aus der relativ zum Objektkoordinatensystem-Ursprung T.O bekannten Lage der Messmarken 5 wird die Lage des Objektkoordinatensystem-Ursprungs T.O im Weltkoordinatensystem W bestimmt.

In vorteilhafter Weise wirken sich eine mangelnde Starrheit (beispielsweise eine Durchbiegung und/oder Verwindung) der Armsegmente 100.1, die Ungenauigkeit der Drehwinkelbestimmung entlang der Gelenkachsen G und ein ungenaues mechanisches Bewegungsmodell des Industrieroboters 100 nicht auf die Genauigkeit der Lagebestimmung des Objektkoordinatensystem-Ursprungs T.O relativ zum Weltkoordinatensystem W aus.

Dadurch ist es möglich, kostengünstigere Positioniereinrichtungen 1 mit geringeren Genauigkeitsanforderungen für die Vermessung von Lichtquellen Q, beispielsweise Scheinwerfern 3, einzusetzen. Es ist lediglich erforderlich, die Konstanz der Lage und/oder der Ausrichtung des von der Haltevorrichtung 2 gehaltenen Scheinwerfers 3 jeweils während der Erfassung eines Teilsegmentes einer LVK zu sichern. Dafür sind kostengünstige und zuverlässige Bremseinrichtungen für Industrieroboter 100 bekannt und verfügbar.

Bei einer Ausführungsform eines Verfahrens zur Vermessung eines Scheinwerfers 3 wird der Scheinwerfer 3 mittels des Industrieroboters 100 zunächst grob an einer Soll-Messposition P1 vorpositioniert. Die grobe Vorpositionierung kann durch Auswertung der Messwerte der Drehwinkelgeber an den Gelenkachsen G erfolgen.

Anschließend kann der Industrieroboter 100 derart angesteuert werden, dass die Lageabweichung der Ist-Messposition P1' von der Soll-Messposition P1 verringert wird.

Dieses Verfahren kann wiederholt werden, wobei die Lageabweichung der Ist-Messposition P1' von der Soll-Messposition P1 iterativ verringert wird, bis eine gewünschte Genauigkeit erreicht (das heißt: eine Obergrenze für die Lageabweichung der Ist-Messposition P1' von der Soll-Messposition P1 unterschritten) ist.

Alternativ ist es auch möglich, eine erreichte Ist-Messposition P1' auch dann beizubehalten, wenn sie von einer Soll-Messposition P1 abweicht, und die durch Auswertung der von den Referenzierungskameras 601, 602 aufgenommenen Bilder bestimmte Lageabweichung des Scheinwerfers 3 und somit auch des Objektkoordinatensystem-Ursprungs T.O bei der Auswertung der mit der Leuchtdichtemesskamera 4 in dem Pixelkoordinatensystem erfassten photometrischen Kenngröße zu berücksichtigen.

**Figur 3** zeigt ein Ausführungsbeispiel, bei dem die Lage des Objektkoordinatensystems T dadurch bestimmt wird, dass zwei als Markierungsscheiben 501, 502 ausgebildete Messmarken 5 an der Haltevorrichtung 2 des Industrieroboters 100 angeordnet sind. Da der Scheinwerfer 3 während des Messvorgangs in der Haltevorrichtung 2 fixiert ist, sind die Markierungsscheiben 501, 502 ortsfest zum Objektkoordinatensystem T angeordnet.

Die Markierungsscheiben 501, 502 weisen ein kontrastreiches Druckmuster auf, beispielsweise in der Art einer Zielscheibe mit konzentrischen, abwechselnd weißen und schwarzen Kreisringen und/oder in der Art eines Fadenkreuzes. Die Markierungsscheiben sind nicht koplanar angeordnet. Vorzugsweise sind die Markierungsscheiben 501, 502 orthogonal zueinander angeordnet.

Im Umfeld des Industrieroboters 100 sind zwei Referenzierungskameras 601, 602 ortsfest zum Weltkoordinatensystem W derart angeordnet, dass in einer Soll-Messposition P1 des Objektkoordinatensystem-Ursprungs T.O jede Referenzierungskamera 601, 602 jeweils eine zugeordnete Markierungsscheibe 501, 502 erfasst. Bevorzugt sind die Referenzierungskameras 601, 602 derart angeordnet, dass in und nahe der Soll-Messposition P1 die jeweils zugeordnete Markierungsscheibe 501, 502 näherungsweise senkrecht, bevorzugt in einem Winkel von zwischen 80° und 100° relativ zur optischen Achse der Referenzierungskamera 601, 602 liegt.

Ist die Soll-Messposition P1 mittels der den Gelenkachsen G zugeordneten Drehwinkelgeber näherungsweise erreicht, werden die Markierungsscheiben 501, 502 von der jeweils zugeordneten Referenzierungskamera 601, 602 aufgenommen und vermessen.

Beispielsweise können die Markierungsscheiben 501, 502 und die Referenzierungskameras 601, 602 so angeordnet sein, dass bei ideal erreichter Soll-Messposition P1 eine Markierungsscheibe 501, 502 jeweils mittig (zentral) im Pixelkoordinatensystem der zugeordneten Referenzierungskamera 601, 602 erscheint. Somit kann eine Abweichung von der Soll-Messposition P1 der Haltevorrichtung 2 in allen Achsen W.x, W.y, W.z des Weltkoordinatensystems W dadurch bestimmt werden, dass die Abweichungen von der mittigen (zentralen) Lage der Markierungsscheibe 501, 502 im Pixelkoordinatensystem der jeweiligen Referenzierungskamera 601, 602 bestimmt und gemäß dem Abbildungsmaßstab in das Weltkoordinatensystem W übertragen werden.

Ein Vorteil dieser Ausführungsform besteht darin, dass auch sehr große Abweichungen von der Soll-Messposition P1 erfasst werden können, indem der Aufnahmebildwinkel der Referenzierungskameras 601, 602 ausreichend groß gewählt wird. Es ist auch möglich, unterschiedlich ausgebildete, beispielsweise mit unterschiedlichen Mustern bedruckte Markierungsscheiben 501, 502 zu verwenden, um eine Verwechslung von Koordinaten der identifizierten Ist-Messposition P1' zu vermeiden.

Ferner ist es auch möglich, mehr als zwei Referenzierungskameras 601, 602 und/oder mehr als zwei Markierungsscheiben 501, 502 zu verwenden, um die Genauigkeit und die Robustheit bei der Positionsbestimmung zu verbessern.

Mehrere Markierungsscheiben 501, 502 können, wenn sie unterschiedlich ausgebildet, beispielsweise mit unterschiedlichen Mustern bedruckt sind, von einer Referenzierungskamera 601, 602 gemeinsam aufgenommen werden. Durch Vermessung des Abstands zwischen den Zentren der aufgenommenen Markierungsscheiben 501, 502 ist es beispielsweise möglich, einen Neigungswinkel einer durch die Zentren der Markierungsscheiben 501, 502 verlaufenden Geraden relativ zur Bildebene der Referenzierungskamera 601, 602 zu ermitteln.

So kann in einem nicht näher dargestellten Ausführungsbeispiel durch drei Referenzierungskameras 601, 602 mit paarweise senkrecht ausgerichteten Bildebenen und insgesamt sechs Markierungsscheiben 501, 502, von denen jeweils zwei koplanar zu einer Bildebene einer jeweils zugeordneten Referenzierungskamera 601, 602 angeordnet sind, die Lage und die Ausrichtung der Haltevorrichtung 2 (und des Objektkoordinatensystems T) relativ zum Weltkoordinatensystem W ermittelt werden.

In einer weiteren, nicht näher dargestellten Ausführungsform sind die Referenzierungskameras 601, 602 durch Cluster von Lichtschranken ersetzt, die von jeweils einander gegenüberliegend und ortsfest zum Weltkoordinatensystem W angeordneten Lichtquellen und Photosensoren gebildet werden. Markierungsscheiben 501, 502 oder ähnlich ausgebildete, starr mit an der Haltevorrichtung 2 angeordnete lichtdichte Messmarken 5 unterbrechen lageabhängig eine oder mehrere diese Lichtschranken und ermöglichen damit die Positionsbestimmung der Haltevorrichtung 2 entlang einer Messrichtung, die jeweils senkrecht zu einer Lichtschranke oder senkrecht zu mehreren Lichtschranken liegt.

**Figur 4** zeigt schematisch ein Ausführungsbeispiel zur Bestimmung der Ausrichtung des Objektkoordinatensystems T.

Referenzierungskameras 601, 602 sind ortsfest zum Objektkoordinatensystem T an der Haltevorrichtung 2 des Industrieroboters 100 angeordnet. Die Referenzierungskameras 601, 602 sind für die Aufnahme von Messmarken 5 eingerichtet, die ortsfest zum Weltkoordinatensystem W in der Umgebung des Industrieroboters 100 angeordnet sind.

Die Messmarken 5 können durch vorhandene, ortsfeste, strukturierte Ausstattungselemente eines Messlabors, beispielsweise Kanten oder Ecken von Schränken, Messtischen, Deckenleuchten oder Installationen, gebildet werden. Die Messmarken 5 können analog zu dem in Figur 3 dargestellten Ausführungsbeispiel auch durch eigens angeordnete Markierungsscheiben 501, 502 oder ähnliche kontraststarke und strukturierte Markierungen gebildet werden.

Die Öffnungswinkel der Referenzierungskameras 601, 602 sind so gewählt, dass sie in jeder Lage und Ausrichtung der Haltevorrichtung 2 mindestens eine der Messmarken 5 erfassen. Zudem sind die Referenzierungskameras 601, 602 auf der Positioniereinrichtung so angeordnet, dass ihre jeweilige optische Achse durch eine Bewegung des Industrieroboters 100 relativ zum Weltkoordinatensystem W veränderbar ist.

Bevorzugt sind die Referenzierungskameras 601, 602 nach dem letzten beweglichen Glied der kinematischen Kette, beispielsweise in fester Lage und Ausrichtung relativ zur Haltevorrichtung 2, angeordnet.

In einer Kalibrierphase wird der umgebende Raum mit den Referenzierungskameras 601, 602 vollständig abgerastert. Für jede der Referenzkalibrierungskameras 601, 602 wird ein Korrelationsdatensatz angelegt, der ein jeweils aufgenommenes Bild zu einer Pose, das heißt: zu einer Lage und einer Ausrichtung, der Haltevorrichtung 2 und somit auch der Referenzierungskameras 601, 602 in Beziehung setzt.

In analoger Weise zu dem anhand von Figur 2 dargestellten Ausführungsbeispiel kann die Ausrichtung des Objektkoordinatensystems T durch Vermessung der Pixelkoordinaten der Abbilder der Messmarken 5 in den durch die Referenzierungskameras 601, 602 aufgenommenen Bildern bestimmt werden.

In einer darauf folgenden Arbeitsphase wird ein von einer Referenzierungskamera 601, 602 erfasstes Bild mit mindestens einem Bild des abgelegten Korrelationsdatensatzes in Überdeckung gebracht und daraus die Ausrichtung der optischen Achse der jeweiligen Referenzierungskamera 601, 602 ermittelt.

Bereits mit einer einzigen Referenzierungskamera 601, 602 kann somit die Ausrichtung des Objektkoordinatensystems T bestimmt werden, wenn dessen Lage, das heißt: die Position des Objektkoordinatensystem-Ursprungs T.O vorher bestimmt wurde, wie beispielsweise anhand von Figur 3 bereits erklärt.

Mit einer Mehrzahl von Referenzierungskameras 601, 602 kann zudem aus deren ermittelten optischen Achsen durch Schnittbildung die Lage des Objektkoordinatensystems T bestimmt oder überprüft werden.

**Figur 5** zeigt eine Ausführungsform des Industrieroboters 100, bei der ortsfest zur Haltevorrichtung 2 eine Pilotlichtquelle 7 mit einer optischen Hauptebene 7.1 angeordnet ist, die entlang von Pilotstrahlen X ein Muster in den Raum projiziert. Die Pose (Lage und Ausrichtung) der Pilotlichtquelle 7 relativ zum Ortskoordinatensystem T ist aus der Montage der Pilotlichtquelle 7 an der Haltevorrichtung 2 bekannt.

Die Pilotlichtquelle 7 kann beispielsweise als diffraktiv-optisches Element (DOE) ausgebildet und so eingerichtet sein, dass etwa im 1-Grad-Raster eine Punktmatrix X.R mit Punkten X.P in einen Teilraum, beispielsweise in einen Halbraum, abgestrahlt wird, wobei jeder Pilotstrahl X zu einem Projektionspunkt X.P der Punktmatrix X.R korrespondiert. Vorzugsweise strahlt die Pilotlichtquelle 7 im nicht sichtbaren und energiearmen Bereich ab.

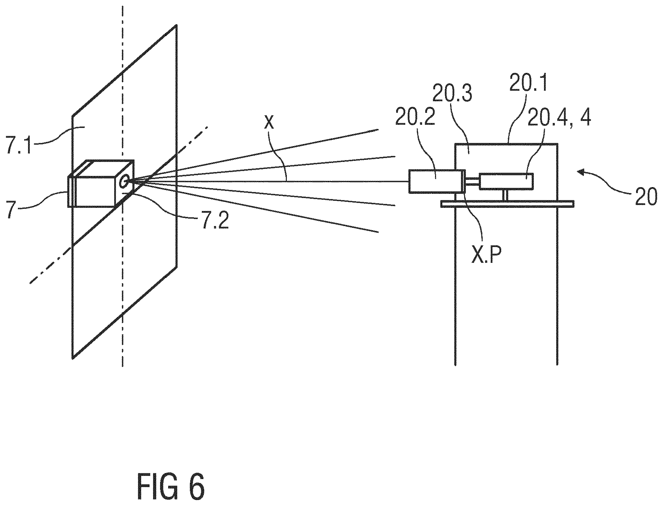

Ein Ausschnitt der Punktmatrix X.R wird mittels einer ortsfest in bekannter Lage und Ausrichtung im Weltkoordinatensystem W angeordneten optischen Auffangeinrichtung 20 aufgefangen, die in **Figur 6** dargestellt ist. Die Auffangeinrichtung 20 ist so angeordnet, dass sie mindestens einen Pilotstrahl X auffängt.

Die Auffangeinrichtung 20 weist ein lichtdichtes Gehäuse 20.1 auf, an dem eintrittsseitig ein Blendentubus 20.2 angeordnet ist. Der Blendentubus 20.2 ragt in das lichtdichte Gehäuse 20.1 hinein und ist an dem in das Gehäuse 20.1 hineinragenden Ende mit einem diffusen Schirm 20.3 abgeschlossen, auf den der mindestens eine aufgefangene Pilotstrahl X als Projektionspunkt X.P abgebildet wird. Der Blendentubus 20.2 kann so eingerichtet sein, dass nur ein einziger Pilotstrahl X auf den Schirm 20.3 geleitet und somit nur ein einziger Proj ektionspunkt X.P auf dem Schirm abgebildet wird.

In Richtung des Pilotstrahls X hinter dem Schirm 20.3 ist eine Auffangkamera 20.4 angeordnet, die ein Bild des Schirms 20.3 mit dem darauf projizierten mindestens einem Projektionspunkt X.P aufnimmt. Die Auffangkamera 20.4 kann als Leuchtdichtemesskamera 4 ausgebildet sein.

Eine Änderung der Ausrichtung der Haltevorrichtung 2 entspricht einer Schwenkung der Hauptebene 7.1 um ein Drehzentrum 7.2 in einem horizontalen Winkel ϕ und/oder in einem vertikalen Winkel θ. Dadurch wird auch der Pilotstrahl X um den horizontalen Winkel ϕ und/oder um den vertikalen Winkel θ geschwenkt und der korrespondierende Projektionspunkt X.P entsprechend in horizontaler und/oder vertikaler Richtung auf dem Schirm 20.3 bewegt.

Die Lage eines Punktes X.P auf dem Schirm 20.3 wird mit der Auffangkamera 20.4 bestimmt. Die Position des Drehzentrums 7.2 der Hauptebene 7.1 ist aus der Bestimmung der Lage des Objektkoordinatensystems T und aus der bekannten Pose der Pilotlichtquelle 7 in diesem Objektkoordinatensystem T bekannt. Aus der horizontalen Lage eines Punktes X.P kann somit der horizontale Winkel ϕ und aus der vertikalen Lage eines Punktes X.P der vertikale Winkel θ bestimmt werden.

Zur Vermeidung einer Mehrdeutigkeit bei der Bestimmung der Winkel ϕ und θ muss der mindestens eine Pilotstrahl X, der durch den Blendentubus 20.2 auf den Schirm 20.3 trifft, identifiziert werden. Dazu können die Strahlprofile verschiedener Pilotstrahlen X, insbesondere benachbarter Pilotstrahlen X, mittels eines DOE unterschiedlich gestaltet werden. Beispielsweise können unterschiedliche Strahlprofile so gestaltet werden, dass in der Punktematrix X.R benachbarte Punkte X.P bei der Projektion auf den Schirm 20.3 unterschiedliche Abmessungen und/oder unterschiedliche Intensität und/oder unterschiedliche Struktur aufweisen und dadurch mittels der Auffangkamera 20.4 unterscheidbar sind.

Alternativ oder zusätzlich kann der mindestens eine Pilotstrahl X, der durch den Blendentubus 20.2 auf den Schirm 20.3 trifft, dadurch identifiziert werden, dass die Ausrichtung des Objektkoordinatensystems T grob, das heißt: mit der Auflösung des Raumwinkelrasters, in dem die Pilotstrahlen X divergieren, bestimmt wird.

Eine derart grobe Bestimmung der Ausrichtung des Objektkoordinatensystems T, beispielhaft mit einer Auflösung von einem Grad, ist durch einfache Sensorik an den Gelenkachsen G des Industrieroboters 100 möglich. Alternativ oder zusätzlich kann eine grobe Bestimmung der Ausrichtung dadurch erfolgen, dass die Lage einer Mehrzahl von Messmarken 5 nach einem der anhand der Figuren 2 oder 3 erläuterten Verfahren bestimmt wird.

Ausgehend von einer solchen groben Ausrichtungsbestimmung, die lediglich zur Identifizierung des mindestens einen, auf dem Schirm 20.3 aufgefangenen Punktes X.P aus der Punktmatrix X.R ausreichen muss, ist durch die Bestimmung der Lage dieses mindestens einen Punktes X.P mittels der Auffangkamera 20.4 eine um Größenordnungen verbesserte Bestimmung der Winkel ϕ und θ, beispielhaft mit einer Auflösung von 1/100 Grad bis 1/1000 Grad, möglich.

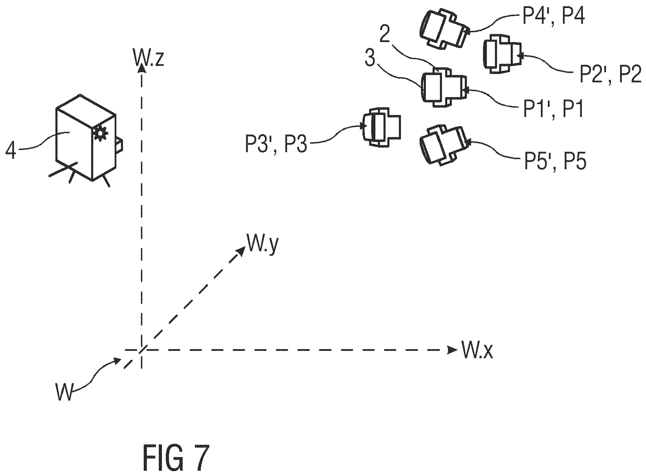

In einer weiteren, in **Figur 7** schematisch dargestellten Ausführungsform wird eine inkrementelle Änderung der Ausrichtung und/oder Lage des von dem Industrieroboter 100 gehaltenen Scheinwerfers 3 durch Registrierung von Leuchtdichtemessbildern 81 bis 85 ermittelt. Vorliegend ist der Scheinwerfer 3 als Fahrzeugscheinwerfer 3 ausgebildet.

Hierzu werden, durch Drehung um mindestens eine Gelenkachse G des Industrieroboters 100, nacheinander eine erste bis fünfte Soll-Messposition P1 bis P5 angefahren. Die dabei jeweils tatsächlich erreichte erste bis fünfte Ist-Messposition P1' bis P5' werden mittels der nicht näher dargestellten Drehwinkelgeber, die den Gelenkachsen des Industrieroboters 100 zugeordnet sind, näherungsweise ermittelt. Alternativ oder zusätzlich können die erste bis fünfte Ist-Messposition P1' auch durch eine Ausführungsform des anhand von Figur 1 bis Figur 4 beschriebenen Verfahrens bestimmt werden.

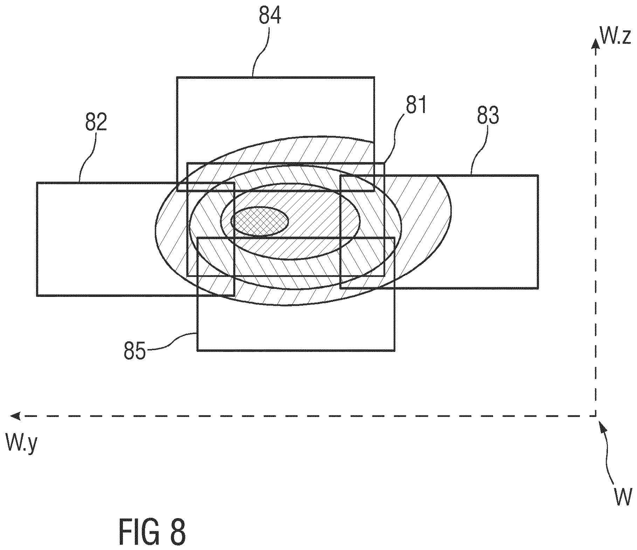

In der ersten bis fünften Ist-Messposition P1` bis P5' wird mit der Leuchtdichtemesskamera 4 jeweils ein erstes bis fünftes Leuchtdichtemessbild 81 bis 85 von dem eingeschalteten Fahrzeugscheinwerfer 3 aufgenommen, die in **Figur 8** schematisch dargestellt sind.

Die erste bis fünfte Soll-Messposition P1 bis P5 sind so eingerichtet und angeordnet, dass die korrespondierenden Leuchtdichtemessbilder 81 bis 85 auch unter Berücksichtigung der beim Anfahren der Soll-Messpositionen P1 bis P5 maximal möglichen Abweichungen der Ist-Messpositionen P1' bis P5' mindestens paarweise eine für eine Bildregistrierung ausreichende Überlappung aufweisen.

Mit anderen Worten: auch bei der ungünstigsten, im Rahmen der beispielsweise durch die Ungenauigkeit der Drehwinkelgeber an den Gelenkachsen G und/oder der Eigenverformung der Armsegmente 100.1 des Industrieroboters 100 möglichen Positioniertoleranz, Anordnung der Ist-Messpositionen P1' bis P5' weisen die Leuchtdichtemessbilder 81 bis 85 eine für eine Bildregistrierung ausreichende Überlappung auf.

Verfahren zur Bildregistrierung, bei denen gegeneinander versetzte und/oder verzerrte Intensitätsbilder (beispielsweise Grauwert- oder Farbbilder) zur Überdeckung gebracht werden, sind aus dem Stand der Technik bekannt, beispielsweise aus der Veröffentlichung B. Zitova, J. Flusser: Image registration methods: a survey, Elsevier. Image and Vision Computing, Bd. 21, 2003, S. 977-1000. Es ist auch bekannt, wie groß, in Abhängigkeit beispielsweise von der Struktur, dem Kontrast oder der Verzerrung der Intensitätsbilder, die für eine Bildregistrierung ausreichende Überlappung sein muss.

Beispielsweise sind die erste bis fünfte Soll-Messposition P1 bis P5 so angeordnet und eingerichtet, dass das der ersten Soll-Messposition P1 zugeordnete erste Leuchtdichtemessbild 81 als ein Ankerbild eine für eine Bildregistrierung ausreichende Überlappung mit jedem weiteren Leuchtdichtemessbild 82 bis 85 aufweist.

Es ist aber auch möglich, dass eine Mehrzahl von Soll-Messpositionen P1 bis P5 so eingerichtet ist, dass die zugeordneten Leuchtdichtemessbilder 81 bis 85 streifenförmig angeordnet sind.

Auch eine beliebige andere, flächig erstreckte Anordnung der Leuchtdichtemessbilder 81 bis 85 kann durch Anordnung und Einrichtung der korrespondierenden Soll-Messpositionen P1 bis P5 erzielt werden, wenn dabei jedes Leuchtdichtemessbild 81 bis 85 über mindestens einen Überdeckungspfad mit jedem anderen Leuchtdichtemessbild 81 bis 85 überlappend verbunden ist, wobei entlang eines Überdeckungspfades von Leuchtdichtemessbildern 81 bis 85 jeweils zwei benachbarte Leuchtdichtemessbilder 81 bis 85 (das heißt: Vorgänger und Nachfolger im Überdeckungspfad) eine für eine Bildregistrierung ausreichende Überlappung aufweisen, wobei die Überlappung auch dann für eine Bildregistrierung ausreichen muss, wenn die jeweils tatsächlich erreichte Ist-Messposition P1` bis P5' von der zugeordneten Soll-Messposition P1 bis P5 im Rahmen der Positioniergenauigkeit des Industrieroboters 100 maximal ungünstig abweicht.

Ein Vorteil dieser Ausführungsform besteht darin, dass die von einem Fahrzeugscheinwerfer 3 generierte Leuchtdichteverteilung großflächig, im Prinzip über eine beliebige Ausdehnung hinweg, erfasst werden kann, insbesondere über den Aufnahmebereich eines einzelnen Leuchtdichtemessbildes 81 bis 85 der Leuchtdichtemesskamera 4 hinaus reicht, wobei an die Positioniergenauigkeit des Industrieroboters 100, insbesondere an dessen mechanische Steifigkeit und an die Genauigkeit von dessen Lage- oder Winkelgebern, nur geringe Anforderungen gestellt werden.

### BEZUGSZEICHENLISTE

- 1: Positioniereinrichtung
- 100: Industrieroboter, Positioniereinrichtung
- 100.1: Armsegment
- 2: Haltevorrichtung
- 3: Scheinwerfer, Fahrzeugscheinwerfer
- 4: Leuchtdichtemesskamera
- 5: Messmarke
- 501, 502: Markierungsscheibe, Messmarke
- 6: Referenzierungsinstrument
- 601, 602, 603: Referenzierungsinstrument, Referenzierungskamera
- 7: Pilotlichtquelle
- 7.1: Hauptebene
- 7.2: Drehzentrum
- 81 bis 85: erstes bis fünftes Leuchtdichtemessbild
- 10: Goniometer, Positioniereinrichtung
- 10.1: Stativarm
- 10.2: Halteplatte, Haltevorrichtung
- 10.D: Drehzentrum
- 10.F: Fuß
- 10.S: Stativ
- 10.X, 10.Y, 10.Z: erste, zweite, dritte Translationsachse
- 10.H, 10.V: horizontale, vertikale Rotationsachse
- 20: Auffangeinrichtung
- 20.1: Gehäuse
- 20.2: Blendentubus
- 20.3: Schirm
- 20.4: Auffangkamera
- *ϕ*ϕ: horizontaler Winkel
- *θ*θ: vertikaler Winkel

- M: Medium, Auffangebene, Messfläche
- G: Gelenkachse
- P1: (erste) Soll-Messposition
- P1': (erste) Ist-Messposition
- P2 bis P5: zweite bis fünfte Soll-Messposition
- P2` bis P5': zweite bis fünfte Ist-Messposition
- Q: Lichtquelle
- T: Obj ektkoordinatensystem
- T.O: Obj ektkoordinatensystem-Ursprung
- T.x: Objekt-x-Achse
- T.y: Objekt-y-Achse
- T.y: Objekt-y-Achse
- W: Weltkoordinatensystem
- W.x: Welt-x-Achse
- W.y: Welt-y-Achse
- W.y: Welt-y-Achse
- X: Pilotstrahl
- X.R: Projektionsmatrix, Punktmatrix
- X.P: Projektionsstruktur, Projektionspunkt

## Patentansprüche

1. Verfahren zur photometrischen Vermessung einer in einer Positioniereinrichtung (1) eingespannten Lichtquelle (Q, 3) mit einem Objektkoordinatensystem (T) mittels einer ortsfest zu einem Weltkoordinatensystem (W) angeordneten Leuchtdichtemesskamera (4), wobei die Lichtquelle (Q, 3) zwischen einer ersten Ist-Messposition (P1') und mindestens einer weiteren Ist-Messposition (P2` bis P5') entlang einer kinematischen Kette der Positioniereinrichtung (1) im Weltkoordinatensystem (W) bewegt wird,
wobei in jeder Ist-Messposition (P1' bis P5') bei eingeschalteter Lichtquelle (Q, 3) mittels der Leuchtdichtemesskamera (4) ein Leuchtdichtemessbild (81 bis 85) aufgenommen wird, das die räumliche Verteilung einer photometrischen Kenngröße in einer Messfläche (M) beschreibt,
wobei die Lage und/oder die Ausrichtung des Objektkoordinatensystems (T) relativ zum Weltkoordinatensystem (W) in jeder Ist-Messposition (P1' bis P5') in direktem Bezug zum Weltkoordinatensystem (W) ohne Bezugnahme auf die kinematische Kette der Positioniereinrichtung (1) mit einer Erfassungstoleranz erfasst wird, die hinsichtlich mindestens eines Parameters kleiner als die zugesicherte Positioniertoleranz der Positioniereinrichtung (1) ist,
wobei die Erfassungstoleranz die maximale Abweichung der tatsächlichen Lage und/ oder Ausrichtung des Objektkoordinatensystems von der erfassten Lage und/oder Ausrichtung des Objektkoordinatensystems relativ zum Weltkoordinatensystem angibt, und wobei die zugesicherte Positioniertoleranz als die maximale Abweichung einer tatsächlich angefahrenen Ist-Messposition (P1' bis P5') von einer vorgegebenen Soll-Messposition (P1 bis P5) bestimmt ist, und
wobei eine erforderliche Positioniertoleranz der Positioniereinrichtung (1) ermittelt und eine Positioniereinrichtung (1) mit einer Positioniertoleranz ausgewählt wird, die kleiner oder bevorzugt gleich der ermittelten erforderlichen Positioniertoleranz ist, wobei die erforderliche Positioniertoleranz derart ermittelt wird, dass eine Abfolge von Soll-Messpositionen (P1 bis P5) derart angeordnet und angefahren werden kann, dass mit der zugeordneten Abfolge von tatsächlich erreichten, jeweils innerhalb der Positioniertoleranz um eine Soll-Messposition (P1 bis P5) liegenden Ist-Messpositionen (P1' bis P5') eine vollständige Erfassung der photometrischen Kenngröße in der Messfläche möglich ist.

2. Verfahren nach Anspruch 1, **dadurch gekennzeichnet, dass** die Messfläche (M) durch ein Medium (M) gebildet wird, das zur diffusen Reflexion und/oder Streuung des von der Lichtquelle (Q, 3) emittierten Lichtes eingerichtet ist, und das in fester Lage und Ausrichtung zum Weltkoordinatensystem (W) angeordnet, von der Lichtquelle (Q, 3) beleuchtet und von der Leuchtdichtemesskamera (4) aufgenommen wird.

3. Verfahren nach einem der vorhergehenden Ansprüche, **dadurch gekennzeichnet, dass** die Leuchtdichtemesskamera (4) in einem direkten Strahlengang die Lichtquelle (Q, 3) erfasst, wobei die Messfläche (M) auf einer der Leuchtdichtemesskamera (4) zugewandten Oberfläche der Lichtquelle (Q, 3) angeordnet wird.

4. Verfahren nach einem der vorhergehenden Ansprüche, **dadurch gekennzeichnet, dass** die Lichtquelle (Q, 3) um mindestens eine durch ein Drehzentrum (10.D, 7.2) verlaufende Achse geschwenkt wird.

5. Verfahren nach einem der vorhergehenden Ansprüche, **dadurch gekennzeichnet, dass** in einem ersten Schritt die Lage des Objektkoordinatensystems (T) relativ zum Weltkoordinatensystem (W) durch direkte Antastung mindestens einer Messmarke (5, 501, 502) ermittelt wird und in einem zweiten Schritt die Ausrichtung des Objektkoordinatensystems (T) relativ zum Weltkoordinatensystem (W) bestimmt wird.

6. Verfahren nach einem der vorhergehenden Ansprüche, **dadurch gekennzeichnet, dass** die Lage und/oder die Ausrichtung des Objektkoordinatensystems (T) durch Erfassung mindestens einer Messmarke (5, 501, 502) mittels jeweils mindestens einer Referenzierungskamera (601, 602) bestimmt wird.

7. Verfahren nach Anspruch 6, **dadurch gekennzeichnet, dass** mindestens eine Referenzierungskamera (601, 602) ortsfest zum Weltkoordinatensystem (W) und mindestens eine Messmarke (5, 501, 502) ortsfest zum Objektkoordinatensystem (T) angeordnet wird.

8. Verfahren nach Anspruch 6 oder 7, **dadurch gekennzeichnet, dass** mindestens eine Referenzierungskamera (601, 602) ortsfest zum Objektkoordinatensystem (T) und mindestens eine Messmarke (5, 501, 502) ortsfest zum Weltkoordinatensystem (W) angeordnet wird.

9. Verfahren nach einem der Ansprüche 6 bis 8, **dadurch gekennzeichnet, dass** mindestens eine Messmarke (5, 501, 502) als aktive Messmarke (5) zur Emission einer von mindestens einer zugeordneten Referenzierungskamera (601, 602) erfassbaren Strahlung eingerichtet ist.

10. Verfahren nach einem der vorhergehenden Ansprüche, **dadurch gekennzeichnet, dass** mindestens eine Auffangebene (20.3, M) ortsfest im Weltkoordinatensystem (W) angeordnet wird, die Lage des Objektkoordinatensystems (T) im Weltkoordinatensystem (W) bestimmt und für jede Lage die jeweilige Ausrichtung des Objektkoordinatensystems (T) aus der Vermessung einer unter bekannter Richtung relativ zum Objektkoordinatensystem (T) abgestrahlten und auf der mindestens einen Auffangebene (20.3, M) aufgefangenen modulierten Beleuchtung ermittelt wird.

11. Verfahren nach Anspruch 10, **dadurch gekennzeichnet, dass** die modulierte Beleuchtung mittels eines diffraktiv-optischen Elements als eine Projektionsmatrix (X.R) erzeugt wird, die mindestens eine Projektionsstruktur (X.P) umfasst, welche entlang jeweils eines Pilotstrahls (X) auf eine Auffangebene (20.3, M) projiziert wird.

12. Verfahren nach Anspruch 10, **dadurch gekennzeichnet, dass** die modulierte Beleuchtung von der Lichtquelle (Q, 13) abgestrahlt wird, wobei Ist-Messpositionen (P1` bis P5') angefahren werden, die jeweils innerhalb eines vorbestimmten Abstands um eine Soll-Messposition (P1 bis P5) liegen, wobei in jeder Ist-Messposition (P1` bis P5') jeweils mindestens ein Leuchtdichtemessbild (81 bis 85) aufgenommen wird, wobei die Soll-Messpositionen (P1 bis P5) so gewählt sind, dass sich mindestens zwei Leuchtdichtemessbilder (81 bis 85) überlappen und wobei der Versatz zwischen einander überlappenden Leuchtdichtemessbildern (81 bis 85) mittels eines Bildregistrierungsverfahrens ermittelt wird und daraus sowie aus den den Leuchtdichtemessbildern (81 bis 85) jeweils zugeordneten Ist-Messpositionen (P1' bis P5') die jeweilige Ausrichtung des Objektkoordinatensystems (T) ermittelt wird.

13. Verfahren nach einem der vorhergehenden Ansprüche, **dadurch gekennzeichnet, dass** zu jeder Ist-Messposition (P1' bis P5') jeweils eine Soll-Messposition (P1 bis P5) durch Auswertung von Parametern der Positioniereinrichtung (1) bestimmt wird und die Lage und Ausrichtung des Objektkoordinatensystems (T) ausgehend von der Soll-Messposition (P1 bis P5) erfasst wird.

14. Verfahren nach Anspruch 13, **dadurch gekennzeichnet, dass** die Positioniereinrichtung (1) für das Anfahren einer Soll-Messposition (P1 bis P5) jeweils derart angesteuert wird, dass eine Ist-Messposition (P1' bis P5') innerhalb eines vorbestimmten Abstands von der jeweils zugeordneten Soll-Messposition (P1 bis P5) erreicht wird.

15. Anwendung eines Verfahrens nach einem der vorhergehenden Ansprüche zur photometrischen Vermessung eines Scheinwerfers (3).

16. Anwendung nach Anspruch 15, **dadurch gekennzeichnet, dass** ein Fahrzeugscheinwerfer (3) photometrisch vermessen wird.

## Claims

1. Method for photometrically measuring a light source (Q, 3) clamped into a positioning device (1), which comprises an object coordinate system (T), by means of a luminance measurement camera (4) arranged fixedly relative to a world coordinate system (W), wherein the light source (Q, 3) is moved between a first current measurement position (P1') and at least one further current measurement position (P2' to P5') along a kinematic chain of the positioning device (1) in the world coordinate system (W),
wherein, with the light source (Q, 3) switched on, a luminance measurement image (81 to 85) is recorded at each current measurement position (P1' to P5') by means of the luminance measurement camera (4), the image describing the spatial distribution of a photometric characteristic in a measurement area (M),
wherein the location and/or the orientation of the object coordinate system (T) relative to the world coordinate system (W) is captured at each current measurement position (P1' to P5') in direct relationship with the world coordinate system (W) without reference to the kinematic chain of the positioning device (1) with a capturing tolerance which, in terms of at least one parameter, is smaller than the assured positioning tolerance of the positioning device (1),
wherein the capturing tolerance indicates the maximum deviation of the actual location and/or orientation of the object coordinate system from the captured location and/or orientation of the object coordinate system relative to the world coordinate system, and wherein the assured positioning tolerance is determined as the maximum deviation of a current measurement position (P1' to P5') that is actually approached from a specified target measurement position (P1 to P5), and
wherein a necessary positioning tolerance of the positioning device (1) is ascertained and a positioning device (1) having a positioning tolerance which is smaller than or preferably identical to the ascertained necessary positioning tolerance is selected, wherein the necessary positioning tolerance is ascertained such that a sequence of target measurement positions (P1 to P5) can be arranged and approached such that complete capturing of the photometric characteristic in the measurement area is possible with the assigned sequence of actually reached current measurement positions (P1' to P5') located in each case within the positioning tolerance around a target measurement position (P1 to P5).

2. Method according to Claim 1, **characterized in that** the measurement area (M) is formed by a medium (M) which is configured for diffuse reflection and/or scattering of the light emitted by the light source (Q, 3) and which is arranged in a fixed location and orientation relative to the world coordinate system (W), is illuminated by the light source (Q, 3) and is recorded by the luminance measurement camera (4).

3. Method according to either of the preceding claims, **characterized in that** the luminance measurement camera (4) captures the light source (Q, 3) in a direct beam path, wherein the measurement area (M) is arranged on a surface of the light source (Q, 3) facing the luminance measurement camera (4).

4. Method according to any of the preceding claims, **characterized in that** the light source (Q, 3) is pivoted about at least one axis extending through a centre of rotation (10.D, 7.2).

5. Method according to any of the preceding claims, **characterized in that**, in a first step, the location of the object coordinate system (T) relative to the world coordinate system (W) is ascertained by directly sampling at least one measurement mark (5, 501, 502) and, in a second step, the orientation of the object coordinate system (T) relative to the world coordinate system (W) is determined.

6. Method according to any of the preceding claims, **characterized in that** the location and/or the orientation of the object coordinate system (T) is determined by capturing at least one measurement mark (5, 501, 502) by means of in each case at least one referencing camera (601, 602)

7. Method according to Claim 6, **characterized in that** at least one referencing camera (601, 602) is arranged fixedly with respect to the world coordinate system (W) and at least one measurement mark (5, 501, 502) is arranged fixedly with respect to the object coordinate system (T).

8. Method according to Claim 6 or 7, **characterized in that** at least one referencing camera (601, 602) is arranged fixedly with respect to the object coordinate system (T) and at least one measurement mark (5, 501, 502) is arranged fixedly with respect to the world coordinate system (W).

9. Method according to any of Claims 6 to 8, **characterized in that** at least one measurement mark (5, 501, 502) is set up as an active measurement mark (5) for emitting radiation which is detectable by at least one assigned referencing camera (601, 602).

10. Method according to any of the preceding claims, **characterized in that** at least one receiving plane (20.3, M) is arranged fixedly in the world coordinate system (W), the location of the object coordinate system (T) in the world coordinate system (W) is determined and the respective orientation of the object coordinate system (T) is ascertained for each location from the measurement of modulated illumination that is emitted in the known direction relative to the object coordinate system (T) and received on the at least one receiving plane (20.3, M).

11. Method according to Claim 10, **characterized in that** the modulated illumination is generated by means of a diffractive optical element as a projection matrix (X.R), which comprises at least one projection structure (X.P) which projects along a respective pilot beam (X) onto a receiving plane (20.3, M).

12. Method according to Claim 10, **characterized in that** the modulated illumination is emitted by the light source (Q, 13), wherein current measurement positions (P1' to P5') are approached which each lie within a predetermined distance around a target measurement position (P1 to P5), wherein in each case at least one luminance measurement image (81 to 85) is recorded at each current measurement position (P1' to P5'), wherein the target measurement positions (P1 to P5) are selected such that at least two luminance measurement images (81 to 85) overlap and wherein the offset between mutually overlapping luminance measurement images (81 to 85) is ascertained by means of an image registration method and the respective orientation of the object coordinate system (T) is ascertained therefrom and from the current measurement positions (P 1' to P5') in each case assigned to the luminance measurement images (81 to 85).

13. Method according to any of the preceding claims, **characterized in that** in each case one target measurement position (P1 to P5) is determined for each current measurement position (P1' to P5') by evaluating parameters of the positioning device (1), and the location and orientation of the object coordinate system (T) are captured proceeding from the target measurement position (P1 to P5).

14. Method according to Claim 13, **characterized in that** the positioning device (1) is controlled for approaching a target measurement position (P1 to P5) in each case such that a current measurement position (P1' to P5') within a predetermined distance from the respectively assigned target measurement position (P1 to P5) is reached.

15. Use of a method according to any of the preceding claims for photometrically measuring a headlamp (3).

16. Use according to Claim 15, **characterized in that** a vehicle headlamp (3) is photometrically measured.

## Revendications

1. Procédé de mesure photométrique d'une source de lumière (Q, 3), fixée dans un dispositif de positionnement (1) et pourvue d'un système de coordonnées d'objet (T), au moyen d'une caméra de mesure de luminance (4) disposée dans une position fixe par rapport à un système de coordonnées mondial (W), la source de lumière (Q, 3) étant déplacée entre une première position de mesure réelle (P1') et au moins une autre position de mesure réelle (P2' à P5') le long d'une chaîne cinématique du dispositif de positionnement (1) dans le système de coordonnées mondial (W),
dans chaque position de mesure réelle (P1' à P5') lorsque la source de lumière (Q, 3) est activée, une image de mesure de luminance (81 à 85), qui décrit la répartition spatiale d'une grandeur photométrique dans une surface de mesure (M), étant enregistrée à l'aide de la caméra de mesure de luminance (4),
la position et/ou l'orientation du système de coordonnées d'objet (T) par rapport au système de coordonnées mondial (W) dans chaque position de mesure réelle (P1 à P5') étant détectées en relation directe avec le système de coordonnées mondial (W) sans référence à la chaîne cinématique du dispositif de positionnement (1) avec une tolérance de détection qui est inférieure à la tolérance de positionnement garantie du dispositif de positionnement (1) par rapport à au moins un paramètre,
la tolérance de détection indiquant l'écart maximal de la position et/ou de l'orientation réelles du système de coordonnées d'objet par rapport à la position et/ou l'orientation détectées du système de coordonnées d'objet par rapport au système de coordonnées mondial, et
la tolérance de positionnement garantie étant déterminée comme l'écart maximal d'une position de mesure réelle (P1' à P5') réellement approchée par rapport à une position de mesure cible spécifiée (P1 à P5), et
une tolérance de positionnement requise du dispositif de positionnement (1) étant déterminée et un dispositif de positionnement (1) étant sélectionné avec une tolérance de positionnement qui est inférieure ou de préférence égale à la tolérance de positionnement requise déterminée, la tolérance de positionnement requise étant déterminée de manière à ce qu'une séquence de positions de mesure cibles (P1 à P5) puisse être disposée et approchée de manière à ce qu'une détection complète de la grandeur photométrique dans la surface de mesure soit possible avec la séquence associée de positions de mesure réelle (P1' à P5') atteintes situées chacune dans la tolérance de positionnement autour d'une position de mesure cible (P1 à P5).

2. Procédé selon la revendication 1, **caractérisé en ce que** la surface de mesure (M) est formée par un milieu (M) qui est adapté pour effectuer une réflexion diffuse et/ou une diffusion de la lumière, émise par la source de lumière (Q, 3), qui est disposé dans une position et une orientation fixes par rapport au système de coordonnées mondial (W), qui est éclairé par la source de lumière (Q, 3) et qui est enregistré par la caméra de mesure de luminance (4).

3. Procédé selon l'une des revendications précédentes, **caractérisé en ce que** la caméra de mesure de luminance (4) détecte la source de lumière (Q, 3) dans un trajet de faisceau direct, la surface de mesure (M) étant disposée sur une surface de la source de lumière (Q, 3) qui est dirigée vers la caméra de mesure de luminance (4).

4. Procédé selon l'une des revendications précédentes, **caractérisé en ce que** la source de lumière (Q, 3) est amenée à pivoter sur au moins un axe passant par un centre de rotation (10.D, 7.2).

5. Procédé selon l'une des revendications précédentes, **caractérisé en ce que**, dans un premier temps, la position du système de coordonnées d'objet (T) par rapport au système de coordonnées mondial (W) est déterminée par palpage direct d'au moins un repère de mesure (5, 501, 502) et, dans un deuxième temps, l'orientation du système de coordonnées d'objet (T) est déterminée par rapport au système de coordonnées mondial (W).

6. Procédé selon l'une des revendications précédentes, **caractérisé en ce que** la position et/ou l'orientation du système de coordonnées d'objet (T) sont déterminées par détection d'au moins un repère de mesure (5, 501, 502) à l'aide d'au moins une caméra de référencement (601, 602).

7. Procédé selon la revendication 6, **caractérisé en ce qu'**au moins une caméra de référencement (601, 602) est disposée de manière fixe par rapport au système de coordonnées mondial (W) et au moins un repère de mesure (5, 501, 502) est disposé de manière fixe par rapport au système de coordonnées d'objet (T).

8. Procédé selon la revendication 6 ou 7, **caractérisé en ce qu'**au moins une caméra de référencement (601, 602) est disposée de manière fixe par rapport au système de coordonnées d'objet (T) et au moins un repère de mesure (5, 501, 502) est disposé de manière fixe par rapport au système de coordonnées mondial (W).

9. Procédé selon l'une des revendications 6 à 8, **caractérisé en ce qu'**au moins un repère de mesure (5, 501, 502) est adapté comme repère de mesure actif (5) pour émettre un rayonnement détectable par au moins une caméra de référencement (601, 602) associée.

10. Procédé selon l'une des revendications précédentes, **caractérisé en ce qu'**au moins un plan de capture (20.3, M) est disposé de manière fixe dans le système de coordonnées mondial (W), la position du système de coordonnées d'objet (T) étant déterminée dans le système de coordonnées mondial (W) et l'orientation respective du système de coordonnées d'objet (T) étant déterminée pour chaque position à partir de la mesure d'un éclairage modulé émis dans une direction connue par rapport au système de coordonnées d'objet (T) et capturé dans l'au moins un plan de capture (20.3, M).

11. Procédé selon la revendication 10, **caractérisé en ce que** l'éclairage modulé est généré au moyen d'un élément optique diffractif sous la forme d'une matrice de projection (X.R), qui comprend au moins une structure de projection (X.P), qui est projetée le long d'un faisceau pilote respectif (X) dans un plan de capture (20.3, M).

12. Procédé selon la revendication 10, **caractérisé en ce que** l'éclairage modulé est émis par la source de lumière (Q, 13), des positions de mesure réelles (P1' à P5') étant approchées, qui se trouvent chacune à moins d'une distance spécifiée autour d'une position de mesure cible (P1 à P5), au moins une image de mesure de luminance (81 à 85) étant enregistrée dans chaque position de mesure réelle (P1' à P5'), les positions de mesure cibles (P1 à P5) étant sélectionnées de telle sorte qu'au moins deux images de mesure de luminance (81 à 85) se chevauchent et le décalage entre des images de mesure de luminance (81 à 85) qui se chevauchent étant déterminé au moyen d'un procédé d'acquisition d'images et l'orientation respective du système de coordonnées d'objet (T) étant déterminée à partir de là et des positions de mesure réelles (P1' à P5') respectivement associées aux images de mesure de luminance (81 à 85) .

13. Procédé selon l'une des revendications précédentes, **caractérisé en ce que**, pour chaque position de mesure réelle (P1' à P5'), une position de mesure cible (P1 à P5) est déterminée par évaluation de paramètres du dispositif de positionnement (1) et la position et l'orientation du système de coordonnées d'objet (T) sont détectées à partir de la position de mesure cible (P1 à P5).

14. Procédé selon la revendication 13, **caractérisé en ce que** le dispositif de positionnement (1) est commandé pour approcher une position de mesure cible (P1 à P5) de manière à ce qu'une position de mesure réelle (P1' à P5') est atteinte à moins d'une distance prédéterminée par rapport à la position de mesure cible (P1 à P5) respectivement associée.

15. Application d'un procédé selon l'une des revendications précédentes à la mesure photométrique d'un phare (3).

16. Application selon la revendication 15, **caractérisée en ce qu'**un phare de véhicule (3) est mesuré de manière photométrique.
